# EUROPEAN PATENT SPECIFICATION

(11) **EP 3 905 729 B1**
(45) Date of publication and mention of the grant of the patent: **25.06.2025**
(21) Application number: 20741153.9
(22) Date of filing: 06.01.2020
(51) Int. Cl.: H04W 4/06

(54) **COMMUNICATION METHOD, APPARATUS, AND DEVICE**
KOMMUNIKATIONSVERFAHREN, GERÄT UND VORRICHTUNG
PROCÉDÉ, APPAREIL, ET DISPOSITIF DE COMMUNICATION

(30) Priority: 18.01.2019 CN 201910108926
(43) Date of publication of application: 03.11.2021
(73) Proprietor: Huawei Technologies Co., Ltd., Shenzhen, Guangdong 518129 (CN)
(72) Inventor: ZHENG, Juan, Shenzhen, Guangdong 518129 (CN); LI, Chaojun, Shenzhen, Guangdong 518129 (CN)
(74) Representative: MERH-IP Matias Erny Reichl Hoffmann Patentanwälte PartG mbB
(86) International application number: PCT/CN2020/070474
(87) International publication number: WO 2020/147603

(56) References cited:
- CN-A- 108 353 318
- CN-A- 108 810 983
- US-A1- 2018 227 866
- US-A1- 2018 324 678
- US-A1- 2018 332 514
- US-A1- 2018 368 089
- ERICSSON: "Multiple SS Blocks per Carrier", 3GPP DRAFT; R1-1712954, 25 August 2017 (2017-08-25), Prague, Czech Republic, pages 1 - 4, XP051315763

## Description

### TECHNICAL FIELD

This application relates to the field of communications technologies, and in particular, to a communications method, apparatus, and device.

### BACKGROUND

Currently, in a wireless communications system, a terminal device may obtain configuration information of an access network device, and access the access network device based on the configuration information.

In a conventional technology, the access network device periodically sends a synchronization signal block (Synchronization Signal Block, SSB). The synchronization signal block includes a primary synchronization signal, a secondary synchronization signal, and a broadcast message, and the broadcast message includes the configuration information of the access network device. The terminal device may be synchronized with the access network device by using the primary synchronization signal and the secondary synchronization signal, and access the access network device based on the configuration information in the broadcast message. However, the broadcast message in the synchronization signal block usually occupies a relatively large frequency bandwidth, and a frequency bandwidth of a narrowband terminal is usually limited. Consequently, the narrowband terminal cannot receive the broadcast message sent by the access network device, and the narrowband terminal cannot obtain the configuration information of the access network device. As a result, the narrowband terminal device cannot normally communicate with the access network device.

Document US 2018/332514 A1 generally relates to provisioning and communicating physical signals and channels in NR networks having a first subset of transmit and receive points that use a first cell ID and a second subset of transmit and receive points that use a second cell ID. Operations include transmitting from, and receiving from, a first transmit and receive point a first signal or channel wherein the first signal or channel is based on a first user equipment (UE) specific parameter assigned via the first subset of transmit and receive points and transmitting from, and receiving from, the first transmit and receive point the plurality of transmit and receive points a second signal or channel wherein the second signal or channel is based on a second UE specific parameter assigned via the second subset of transmit and receive points.

Document US 2018/227866 A1 generally discloses a method relating to transmitting and/or receiving a synchronization signal block. The method includes receiving a synchronization signal block. The method includes detecting a primary synchronization signal and a broadcast channel of the synchronization signal block. Receiving the synchronization signal block includes receiving at least one synchronization signal block of multiple synchronization signal blocks within a time window and the broadcast channel includes multiple sub-bands.

### SUMMARY

This application provides a communications method, apparatus, and device, to improve reliability of communication between a terminal device and an access network device. In particular, there are provided communications methods and corresponding communications apparatuses, having the features of respective independent claims. The embodiments are defined in the dependent claims.

An embodiment of this application provides a communications method. The method includes: A terminal device receives a second synchronization signal block sent by an access network device. The terminal device obtains a broadcast message based on the second synchronization signal block, where a frequency bandwidth of a broadcast message in a first synchronization signal block is greater than a frequency bandwidth of the broadcast message in the second synchronization signal block, and the first synchronization signal block corresponds to the access network device.

That the first synchronization signal corresponds to the access network device may mean that the first synchronization signal is sent by the access network device.

In the foregoing process, the frequency bandwidth of the broadcast message in the first synchronization signal block is greater than the frequency bandwidth of the broadcast message in the second synchronization signal block. Therefore, a narrowband terminal may receive the broadcast message in the second synchronization signal block, and obtain configuration information of the access network device based on the broadcast message in the second synchronization signal block. A broadband terminal may receive the broadcast message in the first synchronization signal block, and may also receive the broadcast message in the second synchronization signal block, so that the broadband terminal may obtain the configuration information of the access network device based on the broadcast message in the first synchronization signal block or the second synchronization signal block. In this way, both the broadband terminal and the narrowband terminal may obtain the broadcast message sent by the access network device, so that both the broadband terminal and the narrowband terminal may obtain the configuration information of the access network device, and both the broadband terminal and the narrowband terminal may perform reliable data transmission with the access network device, thereby improving data transmission reliability.

In a possible implementation, the first synchronization signal block further includes a primary synchronization signal and a secondary synchronization signal; and the second synchronization signal block further includes at least one of a primary synchronization signal or a secondary synchronization signal.

In the foregoing process, both the first synchronization signal block and the second synchronization signal block include the primary synchronization signal and the secondary synchronization signal, so that the terminal device may detect the primary synchronization signal and the secondary synchronization signal in the first synchronization signal block or the second synchronization signal block, and the terminal device may quickly obtain the primary synchronization signal and the secondary synchronization signal through detection.

In a possible implementation, the second synchronization signal block includes the primary synchronization signal and the secondary synchronization signal, a frequency bandwidth of the primary synchronization signal included in the second synchronization signal is the same as a frequency bandwidth of the primary synchronization signal included in the first synchronization signal block, and a frequency bandwidth of the secondary synchronization signal included in the second synchronization signal is the same as a frequency bandwidth of the secondary synchronization signal included in the first synchronization signal block. In this way, the terminal device may detect the primary synchronization signal and the secondary synchronization signal in the first synchronization signal block and the primary synchronization signal and the secondary synchronization signal in the second synchronization signal block on a same frequency, so that a bandwidth capability requirement for the terminal device can be reduced, and synchronization detection performance of the terminal device can be improved.

In a possible implementation, a time domain resource interval between the primary synchronization signal and the secondary synchronization signal that are included in the first synchronization signal block is a first time domain resource interval; and a time domain resource interval between the primary synchronization signal and the secondary synchronization signal that are included in the second synchronization signal block is a second time domain resource interval, where the first time domain resource interval is different from the second time domain resource interval.

In the foregoing process, the first time domain resource interval is different from the second time domain resource interval. Therefore, after the terminal device obtains the primary synchronization signal and the secondary synchronization signal through detection, the terminal device may determine, based on the time domain resource interval between the primary synchronization signal and the secondary synchronization signal, a synchronization signal block type (the first synchronization signal block or the second synchronization signal block) to which the synchronization signals (the primary synchronization signal and the secondary synchronization signal) belong, to avoid unnecessary power consumption when the terminal device detects the broadcast message, and reduce detection complexity of the terminal device.

In a possible implementation, the first synchronization signal block and the second synchronization signal block meet at least one of the following:
the second synchronization signal block includes the primary synchronization signal, and a sequence of the primary synchronization signal included in the second synchronization signal block is the same as a sequence of the primary synchronization signal included in the first synchronization signal block, where for a terminal device that can use both the primary synchronization signal included in the first synchronization signal block and the primary synchronization signal included in the second synchronization signal block, sequence detection complexity is reduced, and standard design complexity can be further reduced;
the second synchronization signal block includes the secondary synchronization signal, and a sequence of the secondary synchronization signal included in the second synchronization signal block is the same as a sequence of the secondary synchronization signal included in the first synchronization signal block, where for a terminal device that can use both the secondary synchronization signal included in the first synchronization signal block and the secondary synchronization signal included in the second synchronization signal block, sequence detection complexity is reduced, and standard design complexity can be further reduced;
the second synchronization signal block includes the primary synchronization signal, and a sequence corresponding to the primary synchronization signal included in the first synchronization signal block is different from a sequence corresponding to the primary synchronization signal included in the second synchronization signal block, where in this way, the terminal device may determine, based on the detected primary synchronization signal, a synchronization signal block type (the first synchronization signal block or the second synchronization signal block) to which the primary synchronization signal belongs, to avoid unnecessary power consumption when the terminal device detects the broadcast message, and reduce detection complexity of the terminal device; and
the second synchronization signal block includes the secondary synchronization signal, and a sequence corresponding to the secondary synchronization signal included in the first synchronization signal block is different from a sequence corresponding to the secondary synchronization signal included in the second synchronization signal block, where in this way, the terminal device may determine, based on the detected primary synchronization signal, a synchronization signal block type (the first synchronization signal block or the second synchronization signal block) to which the primary synchronization signal belongs, to avoid unnecessary power consumption when the terminal device detects the broadcast message, and reduce detection complexity of the terminal device.

In a possible implementation, in one periodicity, the first synchronization signal block is associated with at least one second synchronization signal block, and the at least one second synchronization signal block includes the second synchronization signal block.

In the foregoing process, because the first synchronization signal block is associated with the at least one second synchronization signal block, the terminal device may determine a time domain position of the second synchronization signal block based on the detected first synchronization signal block. For example, after obtaining a synchronization signal (the primary synchronization signal and/or the secondary synchronization signal) in the first synchronization signal block through detection, the narrowband terminal may quickly determine and obtain the second synchronization signal block based on a time domain position of the first synchronization signal block, obtain the broadcast message in the second synchronization signal block through detection, and obtain a configuration parameter of the access network device based on the broadcast message in the second synchronization signal block.

In a possible implementation, a time domain resource interval between the first synchronization signal block and the at least one second synchronization signal block is a predefined or preconfigured time domain resource interval.

In the foregoing process, the time domain resource interval between the first synchronization signal block and the at least one second synchronization signal block is the predefined or preconfigured time domain resource interval. Therefore, after obtaining the first synchronization signal block through detection, the terminal device may determine a time domain resource position of the second synchronization signal block based on a time domain position of the first synchronization signal block and the predefined or preconfigured time domain resource interval.

In a possible implementation, in one periodicity, each first synchronization signal block is associated with a same quantity of second synchronization signal blocks. In this way, combined detection complexity of the terminal device can be reduced. For example, the second synchronization signal block includes only the broadcast message. The terminal device that accesses the access network device by using the second synchronization signal block needs to first obtain synchronization information by using the primary synchronization signal and the secondary synchronization signal in the first synchronization signal block. If in one periodicity, each first synchronization signal block is associated with a different quantity of second synchronization signal blocks, the terminal device further needs to assume a quantity of second synchronization signal blocks associated with the first synchronization signal block, and performs combined detection based on the assumed quantity. This increases complexity of accessing a system by the terminal device. On the contrary, if each first synchronization signal block is associated with the same quantity of second synchronization signal blocks, the terminal device determines a quantity of second synchronization signal blocks on which combined detection may be performed, thereby reducing combined detection complexity.

In a possible implementation, a size of a time domain resource occupied by the first synchronization signal block is the same as a size of a time domain resource occupied by the second synchronization signal block. For example, the first synchronization signal block and the second synchronization signal block occupy a same quantity of OFDM symbols.

In a possible implementation, the first synchronization signal block and the second synchronization signal block occupy different frequency domain resources. In this way, after the terminal device obtains the synchronization signals (the primary synchronization signal and the secondary synchronization signal) through detection, the terminal device may determine, based on a frequency domain position of the synchronization signals, the synchronization signal block type (the first synchronization signal block or the second synchronization signal block) to which the synchronization signals belong, to avoid unnecessary power consumption when the terminal device detects the broadcast message, and reduce detection complexity of the terminal device.

In a possible implementation, a synchronization raster corresponding to the first synchronization signal block is different from a synchronization raster corresponding to the second synchronization signal block. In this way, after the terminal device obtains the synchronization signals (the primary synchronization signal and the secondary synchronization signal) through detection, the terminal device may determine, based on a synchronization raster corresponding to the synchronization signals, the synchronization signal block type (the first synchronization signal block or the second synchronization signal block) to which the synchronization signals belong, to avoid unnecessary power consumption when the terminal device detects the broadcast message, and reduce detection complexity of the terminal device.

In a possible implementation, the second synchronization signal block includes the broadcast message, and does not include the primary synchronization signal or the secondary synchronization signal. The narrowband terminal may detect the primary synchronization signal and the secondary synchronization signal in the first synchronization signal block, and detect the broadcast message in the second synchronization signal block, so that the narrowband terminal may obtain the broadcast message, and further obtain the configuration information of the access network device, thereby ensuring reliability of communication between the narrowband terminal and the access network device. The broadband terminal may detect the primary synchronization signal and the secondary synchronization signal block in the first synchronization signal block, and detect the broadcast message in the second synchronization signal block or the second synchronization signal block, so that in a scenario in which a channel between the broadband terminal and the access network device is relatively poor, the broadband terminal may still maintain data transmission with the access network device based on the broadcast message in the second synchronization signal block, and does not need to reestablish a narrowband data transmission link to the access network device. This reduces system overheads and implementation complexity of the broadband terminal, and also facilitates continuous service transmission and ensures user experience.

In a possible implementation, the second synchronization signal block includes the broadcast message, the primary synchronization signal, and the secondary synchronization signal. The narrowband terminal may detect the primary synchronization signal and/or the secondary synchronization signal in the first synchronization signal block and/or the second synchronization signal block, and detect the broadcast message in the second synchronization signal block, to improve efficiency of obtaining the synchronization signals (the primary synchronization signal and the secondary synchronization signal) through detection by the narrowband terminal, so that the narrowband terminal may obtain the broadcast message, and further obtain the configuration information of the access network device, thereby ensuring reliability of communication between the narrowband terminal and the access network device. The broadband terminal may detect the primary synchronization signal and/or the secondary synchronization signal in the first synchronization signal block and/or the second synchronization signal block, and detect the broadcast message in the first synchronization signal block or the second synchronization signal block, to improve efficiency of obtaining the synchronization signals (the primary synchronization signal and the secondary synchronization signal) through detection by the broadband terminal, so that in a scenario in which a channel between the broadband terminal and the access network device is relatively poor, the broadband terminal may still maintain data transmission with the access network device based on the broadcast message in the second synchronization signal block, and does not need to reestablish a narrowband data transmission link to the access network device. This reduces system overheads and implementation complexity of the broadband terminal, and also facilitates continuous service transmission and ensures user experience.

Optionally, the detecting the primary synchronization signal and/or the secondary synchronization signal in the first synchronization signal block and/or the second synchronization signal block may include: detecting the primary synchronization signal and the secondary synchronization signal in the first synchronization signal block; or detecting the primary synchronization signal and the secondary synchronization signal in the first synchronization signal block; or detecting the primary synchronization signal in the first synchronization signal block, and detecting the secondary synchronization signal in the second synchronization signal block; or detecting the primary synchronization signal in the second synchronization signal block, and detecting the secondary synchronization signal in the first synchronization signal block.

In a possible implementation, the second synchronization signal block includes the broadcast message and the primary synchronization signal. The narrowband terminal may detect the primary synchronization signal in the first synchronization signal block or the second synchronization signal block, detect the secondary synchronization signal in the first synchronization signal block, and detect the broadcast message in the second synchronization signal block, to improve efficiency of obtaining the primary synchronization signal through detection by the narrowband terminal, so that the narrowband terminal may obtain the broadcast message, and further obtain the configuration information of the access network device, thereby ensuring reliability of communication between the narrowband terminal and the access network device. The broadband terminal may detect the primary synchronization signal in the first synchronization signal block or the second synchronization signal block, detect the secondary synchronization signal in the first synchronization signal block, and detect the broadcast message in the first synchronization signal block or the second synchronization signal block, to improve efficiency of obtaining the primary synchronization signal through detection by the broadband terminal, so that in a scenario in which a channel between the broadband terminal and the access network device is relatively poor, the broadband terminal may still maintain data transmission with the access network device based on the broadcast message in the second synchronization signal block, and does not need to reestablish a narrowband data transmission link to the access network device. This reduces system overheads and implementation complexity of the broadband terminal, and also facilitates continuous service transmission and ensures user experience.

In a possible implementation, the second synchronization signal block includes the broadcast message and the secondary synchronization signal. The narrowband terminal may detect the primary synchronization signal in the first synchronization signal block, detect the secondary synchronization signal in the first synchronization signal block or the second synchronization signal block, and detect the broadcast message in the second synchronization signal block, to improve efficiency of obtaining the primary synchronization signal through detection by the narrowband terminal, so that the narrowband terminal may obtain the broadcast message, and further obtain the configuration information of the access network device, thereby ensuring reliability of communication between the narrowband terminal and the access network device. The broadband terminal may detect the primary synchronization signal in the first synchronization signal block, detect the secondary synchronization signal in the first synchronization signal block or the second synchronization signal block, and detect the broadcast message in the first synchronization signal block or the second synchronization signal block, to improve efficiency of obtaining the secondary synchronization signal through detection by the broadband terminal, so that in a scenario in which a channel between the broadband terminal and the access network device is relatively poor, the broadband terminal may still maintain data transmission with the access network device based on the broadcast message in the second synchronization signal block, and does not need to reestablish a narrowband data transmission link to the access network device. This reduces system overheads and implementation complexity of the broadband terminal, and also facilitates continuous service transmission and ensures user experience.

According to a second aspect, this application provides a data processing method. The method includes: An access network device generates a first synchronization signal block and a second synchronization signal block, where a frequency bandwidth of a broadcast message in the first synchronization signal block is greater than a frequency bandwidth of a broadcast message in the second synchronization signal block. The access network device sends the first synchronization signal block and the second synchronization signal block.

In the foregoing process, the access network device may send the first synchronization signal block and the second synchronization signal block, and the frequency bandwidth of the broadcast message in the first synchronization signal block is greater than the frequency bandwidth of the broadcast message in the second synchronization signal block. Therefore, a narrowband terminal may receive the broadcast message in the second synchronization signal block, and obtain configuration information of the access network device based on the broadcast message in the second synchronization signal block. A broadband terminal may receive the broadcast message in the first synchronization signal block, and may also receive the broadcast message in the second synchronization signal block, so that the broadband terminal may obtain the configuration information of the access network device based on the broadcast message in the first synchronization signal block or the second synchronization signal block. In this way, both the broadband terminal and the narrowband terminal may obtain the broadcast message sent by the access network device, so that both the broadband terminal and the narrowband terminal may obtain the configuration information of the access network device, and both the broadband terminal and the narrowband terminal may perform reliable data transmission with the access network device, thereby improving data transmission reliability.

In a possible implementation, the first synchronization signal block further includes a primary synchronization signal and a secondary synchronization signal; and the second synchronization signal block further includes at least one of a primary synchronization signal or a secondary synchronization signal.

In the foregoing process, both the first synchronization signal block and the second synchronization signal block include the primary synchronization signal and the secondary synchronization signal, so that the terminal device may detect the primary synchronization signal and the secondary synchronization signal in the first synchronization signal block or the second synchronization signal block, and the terminal device may quickly obtain the primary synchronization signal and the secondary synchronization signal through detection.

In a possible implementation, the second synchronization signal block includes the primary synchronization signal and the secondary synchronization signal, a frequency bandwidth of the primary synchronization signal included in the second synchronization signal is the same as a frequency bandwidth of the primary synchronization signal included in the first synchronization signal block, and a frequency bandwidth of the secondary synchronization signal included in the second synchronization signal is the same as a frequency bandwidth of the secondary synchronization signal included in the first synchronization signal block. In this way, the terminal device may detect the primary synchronization signal and the secondary synchronization signal in the first synchronization signal block and the primary synchronization signal and the secondary synchronization signal in the second synchronization signal block on a same frequency, so that a bandwidth capability requirement for the terminal device can be reduced, and synchronization detection performance of the terminal device can be improved.

In a possible implementation, a time domain resource interval between the primary synchronization signal and the secondary synchronization signal that are included in the first synchronization signal block is a first time domain resource interval; and a time domain resource interval between the primary synchronization signal and the secondary synchronization signal that are included in the second synchronization signal block is a second time domain resource interval, where the first time domain resource interval is different from the second time domain resource interval.

In the foregoing process, the first time domain resource interval is different from the second time domain resource interval. Therefore, after the terminal device obtains the primary synchronization signal and the secondary synchronization signal through detection, the terminal device may determine, based on the time domain resource interval between the primary synchronization signal and the secondary synchronization signal, a synchronization signal block type (the first synchronization signal block or the second synchronization signal block) to which the synchronization signals (the primary synchronization signal and the secondary synchronization signal) belong, to avoid unnecessary power consumption when the terminal device detects the broadcast message, and reduce detection complexity of the terminal device.

In a possible implementation, the first synchronization signal block and the second synchronization signal block meet at least one of the following:
the second synchronization signal block includes the primary synchronization signal, and a sequence of the primary synchronization signal included in the second synchronization signal block is the same as a sequence of the primary synchronization signal included in the first synchronization signal block, where for a terminal device that can use both the primary synchronization signal included in the first synchronization signal block and the primary synchronization signal included in the second synchronization signal block, sequence detection complexity is reduced, and standard design complexity can be further reduced;
the second synchronization signal block includes the secondary synchronization signal, and a sequence of the secondary synchronization signal included in the second synchronization signal block is the same as a sequence of the secondary synchronization signal included in the first synchronization signal block, where for a terminal device that can use both the secondary synchronization signal included in the first synchronization signal block and the secondary synchronization signal included in the second synchronization signal block, sequence detection complexity is reduced, and standard design complexity can be further reduced;
the second synchronization signal block includes the primary synchronization signal, and a sequence corresponding to the primary synchronization signal included in the first synchronization signal block is different from a sequence corresponding to the primary synchronization signal included in the second synchronization signal block, where in this way, the terminal device may determine, based on the detected primary synchronization signal, a synchronization signal block type (the first synchronization signal block or the second synchronization signal block) to which the primary synchronization signal belongs, to avoid unnecessary power consumption when the terminal device detects the broadcast message, and reduce detection complexity of the terminal device; and
the second synchronization signal block includes the secondary synchronization signal, and a sequence corresponding to the secondary synchronization signal included in the first synchronization signal block is different from a sequence corresponding to the secondary synchronization signal included in the second synchronization signal block, where in this way, the terminal device may determine, based on the detected primary synchronization signal, a synchronization signal block type (the first synchronization signal block or the second synchronization signal block) to which the primary synchronization signal belongs, to avoid unnecessary power consumption when the terminal device detects the broadcast message, and reduce detection complexity of the terminal device.

In a possible implementation, in one periodicity, the first synchronization signal block is associated with at least one second synchronization signal block, and the at least one second synchronization signal includes the second synchronization signal block.

In the foregoing process, because the first synchronization signal block is associated with the at least one second synchronization signal block, the terminal device may determine a time domain position of the second synchronization signal block based on the detected first synchronization signal block. For example, after obtaining a synchronization signal (the primary synchronization signal and/or the secondary synchronization signal) in the first synchronization signal block through detection, the narrowband terminal may quickly determine and obtain the second synchronization signal block based on a time domain position of the first synchronization signal block, obtain the broadcast message in the second synchronization signal block through detection, and obtain a configuration parameter of the access network device based on the broadcast message in the second synchronization signal block.

In a possible implementation, in one periodicity, each first synchronization signal block is associated with a same quantity of second synchronization signal blocks. In this way, combined detection complexity of the terminal device can be reduced. For example, the second synchronization signal block includes only the broadcast message. The terminal device that accesses the access network device by using the second synchronization signal block needs to first obtain synchronization information by using the primary synchronization signal and the secondary synchronization signal in the first synchronization signal block. If in one periodicity, each first synchronization signal block is associated with a different quantity of second synchronization signal blocks, the terminal device further needs to assume a quantity of second synchronization signal blocks associated with the first synchronization signal block, and performs combined detection based on the assumed quantity. This increases complexity of accessing a system by the terminal device. On the contrary, if each first synchronization signal block is associated with the same quantity of second synchronization signal blocks, the terminal device determines a quantity of second synchronization signal blocks on which combined detection may be performed, thereby reducing combined detection complexity.

In a possible implementation, a time domain resource interval between the first synchronization signal block and the at least one second synchronization signal block is a predefined or preconfigured time domain resource interval.

In the foregoing process, the time domain resource interval between the first synchronization signal block and the at least one second synchronization signal block is the predefined or preconfigured time domain resource interval. Therefore, after obtaining the first synchronization signal block through detection, the terminal device may determine the time domain resource position of the second synchronization signal block based on the time domain position of the first synchronization signal block and the predefined or preconfigured time domain resource interval.

In a possible implementation, a size of a time domain resource occupied by the first synchronization signal block is the same as a size of a time domain resource occupied by the second synchronization signal block. For example, the first synchronization signal block and the second synchronization signal block occupy a same quantity of OFDM symbols.

In a possible implementation, the first synchronization signal block and the second synchronization signal block occupy different frequency domain resources. In this way, after the terminal device obtains the synchronization signals (the primary synchronization signal and the secondary synchronization signal) through detection, the terminal device may determine, based on a frequency domain position of the synchronization signals, the synchronization signal block type (the first synchronization signal block or the second synchronization signal block) to which the synchronization signals belong, to avoid unnecessary power consumption when the terminal device detects the broadcast message, and reduce detection complexity of the terminal device.

In a possible implementation, a synchronization raster corresponding to the first synchronization signal block is different from a synchronization raster corresponding to the second synchronization signal block. In this way, after the terminal device obtains the synchronization signals (the primary synchronization signal and the secondary synchronization signal) through detection, the terminal device may determine, based on a synchronization raster corresponding to the synchronization signals, the synchronization signal block type (the first synchronization signal block or the second synchronization signal block) to which the synchronization signals belong, to avoid unnecessary power consumption when the terminal device detects the broadcast message, and reduce detection complexity of the terminal device.

In a possible implementation, the access network device sends the first synchronization signal block and the second synchronization signal block in a time division multiplexing manner.

In a possible implementation, the access network device sends the first synchronization signal block and the second synchronization signal block in a frequency division multiplexing manner.

According to a third aspect, this application provides a communications apparatus, including:
a receiving module, configured to receive a second synchronization signal block sent by an access network device; and
a processing module, configured to obtain a broadcast message based on the second synchronization signal block, where
a frequency bandwidth of a broadcast message in the first synchronization signal block is greater than a frequency bandwidth of the broadcast message in the second synchronization signal block, and the first synchronization signal block corresponds to the access network device.

In a possible implementation, the first synchronization signal block further includes a primary synchronization signal and a secondary synchronization signal; and
the second synchronization signal block further includes at least one of a primary synchronization signal or a secondary synchronization signal.

In a possible implementation, the second synchronization signal block includes the primary synchronization signal and the secondary synchronization signal, a frequency bandwidth of the primary synchronization signal included in the second synchronization signal is the same as a frequency bandwidth of the primary synchronization signal included in the first synchronization signal block, and a frequency bandwidth of the secondary synchronization signal included in the second synchronization signal is the same as a frequency bandwidth of the secondary synchronization signal included in the first synchronization signal block.

In a possible implementation, a time domain resource interval between the primary synchronization signal and the secondary synchronization signal that are included in the first synchronization signal block is a first time domain resource interval; and
a time domain resource interval between the primary synchronization signal and the secondary synchronization signal that are included in the second synchronization signal block is a second time domain resource interval, where the first time domain resource interval is different from the second time domain resource interval.

In a possible implementation, the first synchronization signal block and the second synchronization signal block meet at least one of the following:
the second synchronization signal block includes the primary synchronization signal, and a sequence of the primary synchronization signal included in the second synchronization signal block is the same as a sequence of the primary synchronization signal included in the first synchronization signal block;
the second synchronization signal block includes the secondary synchronization signal, and a sequence of the secondary synchronization signal included in the second synchronization signal block is the same as a sequence of the secondary synchronization signal included in the first synchronization signal block;
the second synchronization signal block includes the primary synchronization signal, and a sequence corresponding to the primary synchronization signal included in the first synchronization signal block is different from a sequence corresponding to the primary synchronization signal included in the second synchronization signal block; and
the second synchronization signal block includes the secondary synchronization signal, and a sequence corresponding to the secondary synchronization signal included in the first synchronization signal block is different from a sequence corresponding to the secondary synchronization signal included in the second synchronization signal block.

In a possible implementation, in one periodicity, the first synchronization signal block is associated with at least one second synchronization signal block, and the at least one second synchronization signal block includes the second synchronization signal block.

In a possible implementation, a time domain resource interval between the first synchronization signal block and the at least one second synchronization signal block is a predefined or preconfigured time domain resource interval.

According to a fourth aspect, this application provides a communications apparatus, including:
a processing module, configured to generate a first synchronization signal block and a second synchronization signal block, where a frequency bandwidth of a broadcast message in the first synchronization signal block is greater than a frequency bandwidth of a broadcast message in the second synchronization signal block; and
a sending module, configured to send the first synchronization signal block and the second synchronization signal block.

In a possible implementation, the first synchronization signal block further includes a primary synchronization signal and a secondary synchronization signal; and
the second synchronization signal block further includes at least one of a primary synchronization signal or a secondary synchronization signal.

In a possible implementation, the second synchronization signal block includes the primary synchronization signal and the secondary synchronization signal, a frequency bandwidth of the primary synchronization signal included in the second synchronization signal is the same as a frequency bandwidth of the primary synchronization signal included in the first synchronization signal block, and a frequency bandwidth of the secondary synchronization signal included in the second synchronization signal is the same as a frequency bandwidth of the secondary synchronization signal included in the first synchronization signal block.

In a possible implementation, a time domain resource interval between the primary synchronization signal and the secondary synchronization signal that are included in the first synchronization signal block is a first time domain resource interval; and
a time domain resource interval between the primary synchronization signal and the secondary synchronization signal that are included in the second synchronization signal block is a second time domain resource interval, where the first time domain resource interval is different from the second time domain resource interval.

In a possible implementation, the first synchronization signal block and the second synchronization signal block meet at least one of the following:
the second synchronization signal block includes the primary synchronization signal, and a sequence of the primary synchronization signal included in the second synchronization signal block is the same as a sequence of the primary synchronization signal included in the first synchronization signal block;
the second synchronization signal block includes the secondary synchronization signal, and a sequence of the secondary synchronization signal included in the second synchronization signal block is the same as a sequence of the secondary synchronization signal included in the first synchronization signal block;
the second synchronization signal block includes the primary synchronization signal, and a sequence corresponding to the primary synchronization signal included in the first synchronization signal block is different from a sequence corresponding to the primary synchronization signal included in the second synchronization signal block; and
the second synchronization signal block includes the secondary synchronization signal, and a sequence corresponding to the secondary synchronization signal included in the first synchronization signal block is different from a sequence corresponding to the secondary synchronization signal included in the second synchronization signal block.

In a possible implementation, in one periodicity, the first synchronization signal block is associated with at least one second synchronization signal block, and the at least one second synchronization signal includes the second synchronization signal block.

In a possible implementation, in the periodicity, each first synchronization signal block is associated with a same quantity of second synchronization signal blocks.

In a possible implementation, a time domain resource interval between the first synchronization signal block and the at least one second synchronization signal block is a predefined or preconfigured time domain resource interval.

According to a fifth aspect, this application provides a communications apparatus, including a memory and a processor. The processor executes program instructions in the memory, to implement the communications method according to any one of the first aspect.

According to a sixth aspect, this application provides a communications apparatus, including a memory and a processor. The processor executes program instructions in the memory, to implement the communications method according to any one of the second aspect.

According to a seventh aspect, this application provides a storage medium. The storage medium is configured to store a computer program. When executed by a computer or a processor, the computer program is used to implement the communications method according to any one of the first aspect.

According to an eighth aspect, this application provides a storage medium. The storage medium is configured to store a computer program. When executed by a computer or a processor, the computer program is used to implement the communications method according to any one of the second aspect.

According to the communications method, apparatus, and device that are provided in this application, the access network device may send the first synchronization signal block and the second synchronization signal block, and the frequency bandwidth of the broadcast message in the first synchronization signal block is greater than the frequency bandwidth of the broadcast message in the second synchronization signal block. In a communication process, the narrowband terminal may receive the broadcast message in the second synchronization signal block, and obtain the configuration information of the access network device based on the broadcast message in the second synchronization signal block. The broadband terminal may receive the broadcast message in the first synchronization signal block, and may also receive the broadcast message in the second synchronization signal block, so that the broadband terminal may obtain the configuration information of the access network device based on the broadcast message in the first synchronization signal block or the second synchronization signal block. In this way, both the broadband terminal and the narrowband terminal may obtain the broadcast message sent by the access network device, so that both the broadband terminal and the narrowband terminal may obtain the configuration information of the access network device, thereby ensuring reliability of data transmission between terminal devices with different bandwidths, especially, the narrowband terminal and the access network device.

### BRIEF DESCRIPTION OF DRAWINGS

FIG. 1 is an architectural diagram of a communications system according to this application;
FIG. 2 is a schematic diagram of a communications method according to this application;
FIG. 3 is a schematic structural diagram of a first synchronization signal block according to this application;
FIG. 4 is a schematic diagram of a process of sending a first synchronization signal block and a second synchronization signal block according to this application;
FIG. 5 is a schematic structural diagram of a second synchronization signal block according to this application;
FIG. 6 is a schematic flowchart of another communications method according to this application;
FIG. 7 is a schematic structural diagram of another second synchronization signal block according to this application;
FIG. 8A is a schematic structural diagram of still another second synchronization signal block according to this application;
FIG. 8B is a schematic structural diagram of yet another second synchronization signal block according to this application;
FIG. 8C is a schematic structural diagram of still yet another second synchronization signal block according to this application;
FIG. 8D is a schematic structural diagram of a further second synchronization signal block according to this application;
FIG. 9 is a schematic flowchart of still another communications method according to this application;
FIG. 10 is a schematic structural diagram of a still further second synchronization signal block according to this application;
FIG. 11 is a schematic flowchart of yet another communications method according to this application;
FIG. 12 is a schematic structural diagram of a yet further second synchronization signal block according to this application;
FIG. 13 is a schematic flowchart of still yet another communications method according to this application;
FIG. 14 is a schematic structural diagram of a communications apparatus according to this application;
FIG. 15 is a schematic structural diagram of a communications apparatus according to this application;
FIG. 16 is a schematic diagram of a hardware structure of a communications apparatus according to this application; and
FIG. 17 is a schematic diagram of a hardware structure of a communications apparatus according to this application.

### DESCRIPTION OF EMBODIMENTS

The technical solutions shown in this application may be applied to a 5th generation mobile communication technology (The 5th Generation mobile communication technology, 5G for short) system, and the 5G system may also be referred to as a 5th generation mobile communication technology new radio (New Radio, NR) system. The technical solutions may also be applied to a long term evolution (Long Term Evolution, LTE) system, for example, a vehicle-to-everything (vehicle to X, V2X) system, a device-to-device (Device to Device, D2D) system, or a machine type communication (Machine Type Communication, MTC) system in an LTE communications system. The technical solutions may be further applied to a universal mobile telecommunications system (Universal Mobile Telecommunications System, UMTS) terrestrial radio access network (UMTS Terrestrial Radio Access Network, UTRAN) system, or a global system for mobile communications (Global System for Mobile Communication, GSM)/enhanced data rate for GSM evolution (Enhanced Data Rate for GSM Evolution, EDGE) system radio access network (GSM EDGE Radio Access Network, GERAN) architecture. The technical solutions shown in this application may be further applied to another communications system, for example, a public land mobile network (Public Land Mobile Network, PLMN) system or a communications system after 5G. This is not limited in this application.

A communications system in this application includes a terminal device, and the terminal device (terminal device) includes but is not limited to a mobile station (Mobile Station, MS), a mobile terminal (Mobile Terminal, MT), a mobile telephone (Mobile Telephone, MT), a handset (handset), portable equipment (portable equipment), and the like. The terminal device may communicate with one or more core networks through a radio access network (Radio Access Network, RAN). For example, the terminal device may be a mobile telephone (which is also referred to as a "cellular" telephone) or a computer having a wireless communication function. The terminal device may alternatively be a portable, pocket-sized, handheld, computer built-in, or in-vehicle mobile apparatus or device.

Optionally, in terms of a bandwidth capability of the terminal device, the terminal device in this application may include a broadband terminal device (a broadband terminal for short below) and a narrowband terminal device (a narrowband terminal for short below).

Optionally, a maximum frequency bandwidth of the narrowband terminal is not greater than a minimum frequency bandwidth of the broadband terminal.

In this application, the maximum frequency bandwidth and the minimum frequency bandwidth may be respectively understood as a maximum frequency bandwidth and a minimum frequency bandwidth that are occupied for data transmission between a terminal and an access network device. The data transmission herein includes control and service data transmission, for example, synchronization signal transmission, broadcast channel transmission, system message transmission, unicast service data transmission, and broadcast service data transmission.

For example, when the narrowband terminal is a terminal device (an NB-IoT terminal for short below) in a narrowband internet of things (Narrow Band Internet of Things, NB-IoT) system, and the broadband terminal is a terminal device in an LTE system or an NR system, it may be considered that the maximum frequency bandwidth of the narrowband terminal is not greater than the minimum frequency bandwidth of the broadband terminal. A frequency bandwidth of the NB-IoT terminal is usually one resource block (Resource Block, RB), and one RB includes 12 subcarriers. When a subcarrier spacing is 15 kHz, the frequency bandwidth of the NB-IoT terminal is 180 kHz. If a guard frequency bandwidth is added, the frequency bandwidth of the NB-IoT device is 200 kHz, in other words, the maximum frequency bandwidth of the narrowband terminal is 200 kHz. In addition, a frequency resource occupied by each of a primary synchronization signal block (Primary Synchronization Signal, PSS) and a secondary synchronization signal block (Secondary Synchronization Signal, SSS) in the LTE system is six RBs, and one RB includes 12 subcarriers. When the subcarrier spacing is 15 kHz, both a frequency bandwidth occupied by the PSS and a frequency bandwidth occupied by the SSS are 1.08 MHz, and a terminal device (an LTE terminal for short below) in the LTE system has a capability of receiving the PSS and the SSS. Therefore, a minimum frequency bandwidth of the LTE terminal is 1.08 MHz. If a guard frequency bandwidth is added, the minimum frequency bandwidth of the LTE terminal is 1.44 MHz. It can be learned from the foregoing that when the narrowband terminal is the NB-IoT terminal, and the broadband terminal is the LTE terminal, the maximum frequency bandwidth of the narrowband terminal is less than the minimum frequency bandwidth of the broadband terminal.

It should be noted herein that one RB includes 12 subcarriers, and a quantity of RBs in embodiments of this application may be replaced with a quantity of subcarriers. For example, 20 RBs may be replaced with 240 subcarriers.

A frequency resource occupied by (Synchronization Signal Block, SSB) in the NR system is 20 RBs, and one RB includes 12 subcarriers. When the subcarrier spacing is 15 kHz, a frequency bandwidth occupied by the SSB is 3.6 MHz, and a terminal device (an NR terminal for short below) in the NR system has a capability of receiving the SSB. Therefore, a minimum frequency bandwidth of the NR terminal is 3.6 MHz. It can be learned from the foregoing that when the narrowband terminal is the NB-IoT terminal, and the broadband terminal is the NR terminal, the maximum frequency bandwidth of the narrowband terminal is less than the minimum frequency bandwidth of the broadband terminal. For another example, when an MTC terminal in the LTE system performs data transmission with the access network device, a maximum data transmission frequency bandwidth that can be supported by the MTC terminal is six RBs. To be specific, when the narrowband terminal is the MTC terminal, and the broadband terminal is an LTE enhanced mobile broadband (Enhanced Mobile Broadband, eMBB) terminal or an NR eMBB terminal, the maximum frequency bandwidth of the narrowband terminal is equal to or less than the minimum frequency bandwidth of the broadband terminal.

Optionally, a minimum frequency bandwidth of the narrowband terminal is less than the minimum frequency bandwidth of the broadband terminal.

In a communication process, before the terminal device establishes a connection to the access network device, the terminal device first receives a synchronization channel and a broadcast channel that are sent by the access network device. To enable the terminal device to receive the synchronization channel and the broadcast channel that are sent by the access network device, a minimum frequency bandwidth of the terminal device needs to be greater than or equal to a frequency bandwidth corresponding to the synchronization signal and the broadcast channel that are sent by the access network device. For ease of description, the frequency bandwidth corresponding to the synchronization signal and the broadcast channel that are sent by the access network device may be directly understood as a minimum frequency bandwidth that the terminal device needs to have if the terminal device needs to access the access network device, namely, the minimum frequency bandwidth of the terminal device. It should be noted that the frequency bandwidth corresponding to the synchronization signal and the broadcast channel that are sent by the access network device may be understood as a frequency bandwidth corresponding to a frequency resource to which the synchronization signal and the broadcast channel that are sent by the access network device are mapped. As described above, the frequency bandwidth corresponding to the synchronization signal and the broadcast channel that are sent by the access network device may be understood as six RBs for the LTE system, and may be understood as 20 RBs for the NR system. Because a frequency bandwidth for the synchronization channel and the broadcast channel that are sent by the access network device and are received by the broadband terminal is usually greater than a frequency bandwidth for the synchronization channel and the broadcast channel that are sent by the access network device and are received by the narrowband terminal, it may be considered that the minimum frequency bandwidth of the narrowband terminal is less than the minimum frequency bandwidth of the broadband terminal. For example, a frequency bandwidth for the synchronization channel and the broadcast channel that are sent by the access network device and are received by the NB-IoT terminal device (the narrowband terminal) is one RB, and a frequency bandwidth for the synchronization channel and the broadcast channel that are sent by the access network device and are received by the eMBB terminal are six RBs (corresponding to the LTE system) or 20 RBs (corresponding to the LTE system).

Optionally, in this application, the narrowband terminal needs to maintain normal data communication with the access network device by using a coverage enhancement (Coverage Enhancement, CE) technology, and the broadband terminal device may maintain normal data communication with the access network device even without the CE technology. The CE technology includes but is not limited to technologies such as repeated data transmission and power increase. Alternatively, if the broadband terminal device also needs to maintain normal data communication with the access network device through repeated data transmission in some scenarios (for example, signal quality of an environment in which the broadband terminal is located is poor), a maximum quantity of repetition times required for maintaining data communication between the narrowband terminal device and the access network device needs to be less than a maximum quantity of repetition times required for maintaining data communication between the broadband terminal device and the access network.

Optionally, in this application, the narrowband terminal may also be understood as a bandwidth limited (Bandwidth Limited, BL) terminal.

The communications system in this application includes the access network device. The access network device may be a gNB, a transmission reception point (transmission reception point, TRP), a micro base station, or the like in the 5G communications system, or may be an evolved NodeB (Evolutional NodeB, eNB or eNodeB) in the LTE system. Alternatively, the access network device may be a relay station, an access point, a vehicle-mounted device, a wearable device, a network device in a future evolved public land mobile network (Public Land Mobile Network, PLMN), a network device in a network in which a plurality of other technologies are converged, a base station in various other evolved networks, or the like.

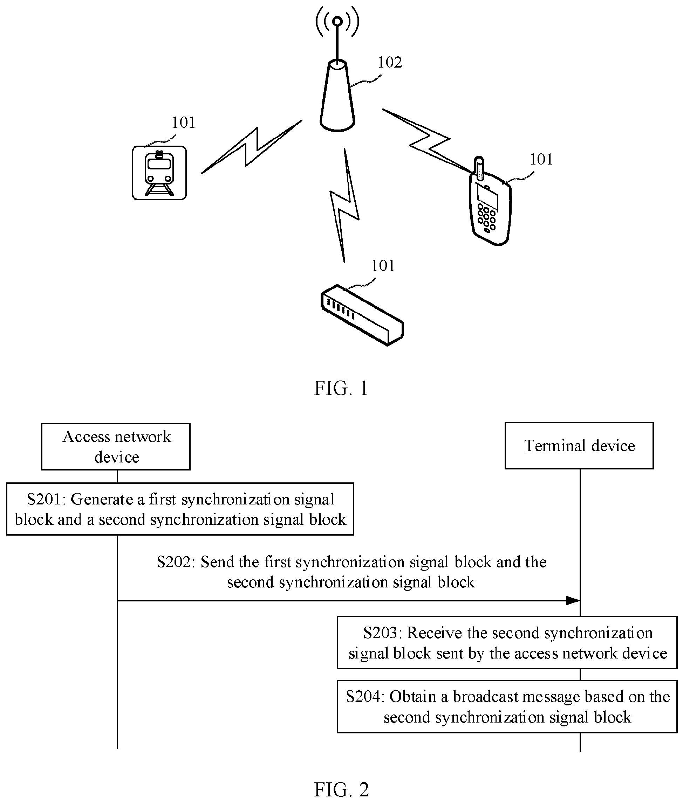

FIG. 1 is an architectural diagram of a communications system according to this application. Refer to FIG. 1. The communications system includes a terminal device 101 and an access network device 102.

For descriptions of the terminal device 101 and the access network device 102, refer to the foregoing embodiment. Details are not described herein again.

In a communication process, the terminal device 101 may obtain synchronization signals sent (for example, broadcast) by the access network device, for example, a primary synchronization signal and a secondary synchronization signal. The terminal device may implement synchronization (for example, time synchronization and frequency synchronization) with the access network device 102 based on the primary synchronization signal and the secondary synchronization signal. After the terminal device 101 implements synchronization with the access network device 102, the terminal device 101 may further receive a broadcast message sent by the access network device 102, for example, information carried on a physical broadcast channel or a system message (System Information, SI), and correctly demodulate the broadcast message. The broadcast message includes configuration information of the access network device 102, for example, a bandwidth configuration, a subcarrier spacing configuration, and random access channel (Random Access CHannel, RACH) configuration information. The terminal device 101 may obtain the configuration information of the access network device from the broadcast message.

In this application, the access network device 102 may send a first synchronization signal block and a second synchronization signal block. The first synchronization signal block includes a primary synchronization signal, a secondary synchronization signal, and a broadcast message, the second synchronization signal block includes a broadcast message, and a frequency bandwidth of the broadcast message in the first synchronization signal block is greater than a frequency bandwidth of the broadcast message in the second synchronization signal block. In the communication process, a narrowband terminal may receive the broadcast message in the second synchronization signal block. Optionally, the narrowband terminal may further obtain the configuration information of the access network device based on the broadcast message in the second synchronization signal block. A broadband terminal may receive the broadcast message in the first synchronization signal block, and may also receive the broadcast message in the second synchronization signal block, so that the broadband terminal may obtain the configuration information of the access network device based on the broadcast message in the first synchronization signal block or the second synchronization signal block. In this way, both the broadband terminal and the narrowband terminal may obtain the broadcast message sent by the access network device, so that both the broadband terminal and the narrowband terminal may obtain the configuration information of the access network device, thereby improving communication reliability.

It should be noted that FIG. 1 is merely an example of an architectural diagram of a communications system to which this application is applicable, and is not a limitation on an architecture of the communications system to which this application is applicable.

The following describes in detail the technical solutions shown in this application with reference to specific embodiments. It should be noted that the following several specific embodiments may be independent or may be combined with each other, and same or similar content is not described repeatedly in different embodiments. In addition, any "optional" solutions in the embodiments of this application may be implemented by superimposing any one of the foregoing optional solutions or designs in the embodiments. Unless otherwise specified, the "terminal device" in the embodiments of this application includes the narrowband terminal and the broadband terminal. In other words, the terminal device may be the narrowband terminal or may be the broadband terminal.

FIG. 2 is a schematic diagram of a communications method according to this application. Refer to FIG. 2. The method may include the following steps.

S201: An access network device generates a first synchronization signal block and a second synchronization signal block.

A frequency bandwidth of a broadcast message in the first synchronization signal block is greater than a frequency bandwidth of a broadcast message in the second synchronization signal block.

Optionally, the first synchronization signal block may include a primary synchronization signal, a secondary synchronization signal, and the broadcast message. The primary synchronization signal and the secondary synchronization signal are used to ensure that a terminal device is synchronized with the access network device.

Optionally, the access network device sends a broadcast message through a broadcast channel. After the terminal device is synchronized with the access network device, the terminal device may demodulate the broadcast message sent by the access network device, to obtain configuration information of the access network device. The broadcast channel is a physical broadcast channel (PBCH).

Optionally, the broadcast message includes the configuration information provided by the access network device for the terminal device. For example, the configuration information may include a bandwidth configuration, a subcarrier spacing configuration, a RACH configuration, and the like.

The first synchronization signal block may be a synchronization signal block sent by the access network device in a conventional technology. To be specific, the frequency bandwidth occupied by the broadcast message in the first synchronization signal block is usually greater than a maximum frequency bandwidth of a narrowband terminal. Consequently, the narrowband terminal cannot receive the broadcast message in the first synchronization signal block sent by the access network device.

In an optional design, the second synchronization signal block may include only the broadcast message. Herein, that only the broadcast message is included means that a primary synchronization signal and a secondary synchronization signal are not included. In a scenario in which the second synchronization signal block includes only the broadcast message, the second synchronization signal block may be replaced with a second broadcast channel or a second physical broadcast channel.

Optionally, the maximum frequency bandwidth of the narrowband terminal is greater than or equal to a frequency bandwidth of the primary synchronization signal in the first synchronization signal block and a frequency bandwidth of the secondary synchronization signal in the first synchronization signal block. Correspondingly, the narrowband terminal may receive the primary synchronization signal and the secondary synchronization signal in the first synchronization signal block.

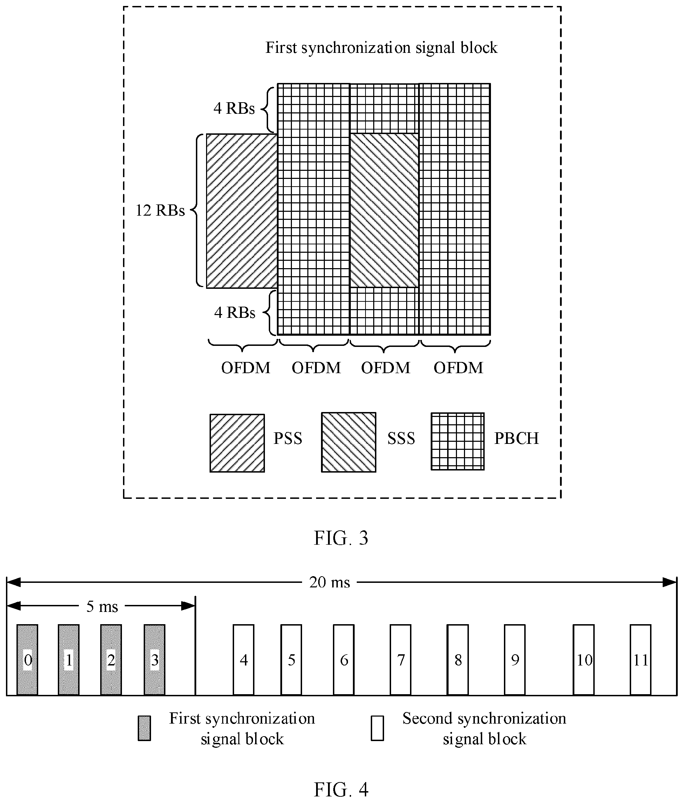

For example, when a communications system is an NR system, a structure of the first synchronization signal block may be that shown in FIG. 3.

FIG. 3 is a schematic structural diagram of a first synchronization signal block according to this application. Refer to FIG. 3. The first synchronization signal block includes a primary synchronization signal (PSS), a secondary synchronization signal (SSS), and a broadcast message. The broadcast message is transmitted through a physical broadcast channel (Physical Broadcast Channel, PBCH).

In time domain, the first synchronization signal block occupies four orthogonal frequency division multiplexing (Orthogonal Frequency Division Multiplexing, OFDM) symbols. In frequency domain, the first synchronization signal block occupies 20 RBs. The primary synchronization signal occupies 12 RBs on the first OFDM symbol, the secondary synchronization signal occupies 12 RBs on the third OFDM symbol, and the broadcast message (or the PBCH) occupies 20 RBs on the second OFDM symbol, eight RBs on the third OFDM symbol, and 20 RBs on the fourth OFDM symbol.

A structure of the first synchronization signal block is that shown in FIG. 3. The terminal device can access the access network device in the NR system by using the first synchronization signal block shown in FIG. 3 only when the frequency bandwidth of the terminal device needs to be greater than or equal to a frequency bandwidth corresponding to 20 RBs. It should be noted that, in this embodiment of this application, the frequency bandwidth of the terminal device may be alternatively represented as a frequency bandwidth capability of the terminal device when the terminal device communicates with the access network device, and the frequency bandwidth capability may also represent that a transmission bandwidth corresponding to data transmission is within a bandwidth corresponding to the frequency bandwidth capability when the data transmission (including sending and receiving) is performed between the terminal device and the access network device. For example, if the frequency bandwidth capability of the terminal device is 20 RBs, it indicates that the terminal device may receive data that is sent by the access network device and whose bandwidth is equal to or less than 20 RBs, or send, to the access network device, data whose bandwidth is equal to or less than 20 RBs when communicating with the access network device.

Optionally, the second synchronization signal block occupies at least one OFDM symbol in time domain. When the second synchronization signal block occupies more than one OFDM symbol in time domain, OFDM symbols occupied by the second synchronization signal block in time domain are consecutive. For example, assuming that the second synchronization signal block occupies three OFDM symbols in time domain, the three OFDM symbols are consecutive in time domain.

Further, the frequency bandwidth of the broadcast message in the second synchronization signal block is less than the frequency bandwidth of the broadcast message in the first synchronization signal block. Optionally, the frequency bandwidth of the broadcast message in the second synchronization signal block is less than 20 RBs or less than 240 subcarriers. It may be understood that the second synchronization signal block is used by the narrowband terminal device. Therefore, the frequency bandwidth is less than the frequency bandwidth of the first synchronization signal block, that is, less than 240 subcarriers or 20 RBs. Further optionally, the frequency bandwidth of the second synchronization signal block may be a fixed value or a predefined or preset value. For example, assuming that the first synchronization signal block is that shown in FIG. 3, the frequency bandwidth of the second synchronization signal block is less than 20 RBs. When a subcarrier spacing is 15 kHz, the frequency bandwidth of the second synchronization signal block is less than 3.6 MHz.

Optionally, the frequency bandwidth occupied by the broadcast message in the second synchronization signal block is less than or equal to a minimum frequency bandwidth of the narrowband terminal, so that the narrowband terminal may receive the broadcast message in the second synchronization signal block; or in other words, a frequency bandwidth capability of the narrowband terminal device is greater than or equal to the frequency bandwidth corresponding to the broadcast message included in the second synchronization signal block; or in other words, the frequency bandwidth occupied by the broadcast message in the second synchronization signal block is less than or equal to the maximum frequency bandwidth of the narrowband terminal.

Optionally, a size of a time domain resource occupied by the broadcast message in the second synchronization signal block may be the same as a size of a time domain resource occupied by the first synchronization signal block. Optionally, the size of the time domain resource may be represented by using a quantity of OFDM symbols. For example, when the first synchronization signal block occupies four OFDM symbols, the second synchronization signal block may also occupy four OFDM symbols, and all the four OFDM symbols are used to transmit the broadcast message in the second synchronization signal block. The broadcast message is usually carried on the broadcast channel or the physical broadcast channel. Therefore, the foregoing example may also be understood as that all the four OFDM symbols are used to transmit the broadcast channel included in the second synchronization signal block.

Optionally, a size of a time domain resource occupied by the broadcast message in the second synchronization signal block may be different from a size of a time domain resource occupied by the first synchronization signal block. Optionally, the size of the time domain resource may be represented by using a quantity of OFDM symbols. For example, when the first synchronization signal block occupies four OFDM symbols, the second synchronization signal block including only the broadcast message may occupy two, three, or four OFDM symbols, or even more than four symbols.

Optionally, a size of a time domain resource occupied by the second synchronization signal block may be the same as or different from a size of a time domain resource occupied by the first synchronization signal block. For example, the size of the time domain resource is represented by using a quantity of OFDM symbols. If the first synchronization signal block occupies four OFDM symbols, a quantity of OFDM symbols occupied by the second synchronization signal block may be equal to 4 or may not be equal to 4.

In an actual application process, the size of the time domain resource occupied by the broadcast message in the second synchronization signal block may be set based on an actual requirement.

Optionally, the access network device may send the first synchronization signal block and the second synchronization signal block in a time division multiplexing (Time Division Multiplexing, TDM) manner. In other words, the first synchronization signal block and the second synchronization signal block that are sent by the access network device occupy different time domain resources. When an OFDM symbol is used to represent a time domain resource, the first synchronization signal block and the second synchronization signal block that are sent by the access network device occupy different OFDM symbols.

Optionally, the access network device may further send the first synchronization signal block and the second synchronization signal block in a frequency division multiplexing (Frequency Division Multiplexing, FDM) manner. In other words, the first synchronization signal block and the second synchronization signal block that are sent by the access network device occupy different frequency domain resources. Further optionally, if a synchronization raster (Synchronization raster) is used to indicate a frequency domain resource, the first synchronization signal block and the second synchronization signal block that are sent by the access network device correspond to different synchronization rasters.

S202: The access network device sends the first synchronization signal block and the second synchronization signal block.

Optionally, the access network device may periodically send the first synchronization signal block and periodically send the second synchronization signal block. A periodicity for sending the first synchronization signal block by the access network may be the same as or different from a periodicity for sending the second synchronization signal block by the access network.

Optionally, the periodicity for sending the first synchronization signal block by the access network device may be the same as a periodicity for detecting a synchronization signal block by a terminal device in an idle state. For example, assuming that the terminal device in the idle state detects a synchronization signal block every 20 milliseconds, the periodicity for sending the first synchronization signal block by the access network device may be 20 milliseconds.

It should be noted that, in an actual application process, the periodicity for sending the first synchronization signal block and the periodicity for sending the second synchronization signal block may be set based on an actual requirement. This is not specifically limited in this application.

Optionally, the access network device may repeatedly send a plurality of first synchronization signal blocks in one periodicity for sending the first synchronization signal block. The plurality of first synchronization signal blocks repeatedly sent in the periodicity carry same information. It should be noted that if the first synchronization signal block includes time information of the access network device, and the time information varies with a time position of the first synchronization signal block, that the plurality of first synchronization signal blocks repeatedly sent in the periodicity carry same information may mean that information other than the time information included in the first synchronization signal block is the same. If the first synchronization signal block does not include time information of the access network device, that the plurality of first synchronization signal blocks repeatedly sent in the periodicity carry same information may mean that all information carried in the second synchronization signal block is the same. In this application, the information carried in the first synchronization signal block may be the broadcast message included in the first synchronization signal block. For example, in one periodicity, the access network device separately sends first synchronization signal blocks at a time position 1, a time position 2, a time position 3, and a time position 4. In other words, in one periodicity, the access network device sends four first synchronization signal blocks, the four time positions do not overlap with each other, and the terminal device may determine, based on the detected first synchronization signal blocks, the time positions corresponding to the first synchronization signal blocks. In other words, first synchronization signal blocks sent by the access network device at different time positions include time positions corresponding to the first synchronization signal blocks. In the foregoing case, if information other than time position information is the same in information carried in the four first synchronization signal blocks, it may be considered that the information carried in the four first synchronization signal blocks is the same in one periodicity. In other words, the access network device repeatedly sends the four first synchronization signal blocks in one periodicity.

It should be noted that the plurality of first synchronization signal blocks repeatedly sent in the periodicity may correspond to a same transmit beam direction of the access network device, or may correspond to different transmit beam directions of the access network device. This is not specifically limited in this application.

In this application, the periodicity for sending the plurality of first synchronization signal blocks by the access network device may be a default periodicity, of a terminal in the idle state or an inactive state, for sending the first synchronization signal block by the access network device. For example, in the NR system, the default periodicity, of the terminal in the idle state, for sending the first synchronization signal block by the access network device is 20 ms. It should be noted that the terminal in the inactive state is a terminal device between the idle state and an active (Active) state. It should be noted that in this periodicity, the access network device may send the plurality of first synchronization signal blocks. For example, for a frequency band whose center frequency is less than 3 GHz, the access network device may send a maximum of four first synchronization signal blocks in one periodicity. For a frequency band whose center frequency is greater than 3 GHz and less than 6 GHz, the access network device may send a maximum of eight first synchronization signal blocks in one periodicity.

Because the access network device repeatedly sends the plurality of first synchronization signal blocks, a probability that the terminal device obtains the first synchronization signal block through detection can be increased. When the terminal device receives the plurality of first synchronization signal blocks, the terminal device may perform combined detection on the plurality of received first synchronization signal blocks, to improve a probability that the terminal device correctly demodulates the first synchronization signal block.

Optionally, the access network device may send a plurality of second synchronization signal blocks in one periodicity for sending the second synchronization signal block. The plurality of second synchronization signal blocks sent in the periodicity carry same information. It should be noted that if the second synchronization signal block includes time information of the access network device, and the time information varies with a time position of the second synchronization signal block, that the plurality of second synchronization signal blocks sent in the periodicity carry same information may mean that information other than the time information included in the second synchronization signal block is the same. If the second synchronization signal block does not include time information of the access network device, that the plurality of second synchronization signal blocks sent in the periodicity carry same information may mean that all information carried in the second synchronization signal blocks is the same. In this application, the time information of the access network device may include a time domain resource position corresponding to the second synchronization signal block, the time domain resource position may be represented by using a system frame number (System Frame Number, SFN), a half-frame number, and an index of the second synchronization signal block, and the index of the second synchronization signal block is in a one-to-one correspondence with a time position corresponding to the time domain resource of the second synchronization signal block. The time position corresponding to the time domain resource of the second synchronization signal block may be represented by using an OFDM symbol index. In other words, the time information of the access network device may be represented by using the SFN, the half-frame number, and the index of the second synchronization signal block. Similarly, the time information of the access network device may alternatively be represented by using an SFN, a half-frame number, and an index of the first synchronization signal block, and the index of the first synchronization signal block is in a one-to-one correspondence with a time position corresponding to the time domain resource of the first synchronization signal.

In this application, the information carried in the second synchronization signal block may be the broadcast message included in the second synchronization signal block. For example, in one periodicity, the access network device separately sends second synchronization signal blocks on a time domain resource 1, a time domain resource 2, a time domain resource 3, and a time domain resource 4. In other words, in one periodicity, the access network device sends four second synchronization signal blocks, and the four time domain resources do not overlap with each other in time domain. The terminal device may determine, based on a detected second synchronization signal block, a time domain resource corresponding to the second synchronization signal block, for example, may determine an SFN and a half-frame number corresponding to the second synchronization signal block, and an OFDM symbol position occupied by the second synchronization signal block in one half-frame. In other words, second synchronization signal blocks sent by the access network device on different time domain resources include time domain resource information corresponding to the second synchronization signal blocks. In the foregoing case, if information other than the time domain resource information is the same in information carried in the four second synchronization signal blocks, it may be considered that the information carried in the four second synchronization signal blocks is the same in one periodicity. In other words, the access network device sends the four second synchronization signal blocks in one periodicity.

It should be noted that the plurality of second synchronization signal blocks sent in the periodicity may correspond to a same transmit beam direction of the access network device, or may correspond to different transmit beam directions of the access network device. This is not specifically limited in this application.

In this application, the periodicity for sending the second synchronization signal block may also be understood as a default periodicity, of the terminal in the idle state or the inactive state, for sending the second synchronization signal block.

Because the access network device sends the plurality of second synchronization signal blocks, a probability that the terminal device obtains the second synchronization signal block through detection can be increased. When the terminal device receives the plurality of second synchronization signal blocks, the terminal device may perform combined detection on the plurality of received second synchronization signal blocks, to improve a probability that the terminal device correctly demodulates the second synchronization signal block.

For example, the terminal device may perform, based on the periodicity for sending the second synchronization signal block, combined detection on the second synchronization signal blocks sent by the access network device in one sending periodicity.

Optionally, when the periodicity for sending the first synchronization signal block by the access network device is the same as the periodicity for sending the second synchronization signal block by the access network device, a time period in which the access network device sends the first synchronization signal block is different from a time period in which the access network device sends the second synchronization signal block. In this way, sending of the second synchronization signal block does not affect sending of the first synchronization signal block, thereby ensuring reliability of obtaining the configuration information of the access network device by using the first synchronization signal block. Optionally, the periodicity for sending the first synchronization signal block by the access network device is the same as the periodicity for sending the second synchronization signal block by the access network device. For example, the periodicity is 20 ms. In a scenario in which the periodicities are the same, start positions or end positions of sending the first synchronization signal block and the second synchronization signal block are not specifically limited in this application.

For example, the terminal device may perform, based on the periodicity for sending the first synchronization signal block by the access network device, combined detection on the first synchronization signal blocks sent by the access network device in one sending periodicity.

The following describes, with reference to FIG. 4, a process in which the access network device sends the first synchronization signal block and the second synchronization signal block.

FIG. 4 is a schematic diagram of a process of sending a first synchronization signal block and a second synchronization signal block according to this application. Refer to FIG. 4. Both the periodicity for sending the first synchronization signal block by the access network device and the periodicity for sending the second synchronization signal block by the access network device are 20 milliseconds. In one periodicity (20 milliseconds), the access network device may send a plurality of first synchronization signal blocks in the first 5-millisecond window of the periodicity, and send a plurality of second synchronization signal blocks in the last 15-millisecond window of the periodicity.

It should be noted that, in an actual application process, a quantity of times of sending the first synchronization signal block in one periodicity and a time window occupied for sending the first synchronization signal block may be set based on an actual requirement, and a quantity of times of sending the second synchronization signal block in one periodicity and a time window occupied for sending the first synchronization signal block may be set based on an actual requirement. This is not specifically limited in this application.

Optionally, the first synchronization signal block sent by the access network device is associated with at least one second synchronization signal block.

Optionally, in one periodicity, the access network device sends at least one first synchronization signal block and at least one second synchronization signal block, and the first synchronization signal block is associated with the at least one second synchronization signal block.

Optionally, the periodicity may be the periodicity for sending the first synchronization signal block by the access network device, or the periodicity may be the periodicity for sending the second synchronization signal block by the access network device.

In one periodicity, the access network device repeatedly sends the at least one first synchronization signal block. For example, refer to FIG. 4. The access network device repeatedly sends four first synchronization signal blocks in one periodicity (20 milliseconds). In the periodicity, the access network device repeatedly sends the at least one second synchronization signal block. For example, refer to FIG. 4. The access network device repeatedly sends eight second synchronization signal blocks in the periodicity (20 milliseconds).

In this application, the periodicity may also be understood as a time range. In the time range, the first synchronization signal block sent by the access network device in the periodicity for sending the first synchronization signal block and the second synchronization signal block sent by the access network device in the periodicity for sending the second synchronization signal block are included. The time range appears periodically. To be specific, in each time range, transmission patterns of the first synchronization signal block and the second synchronization signal block are the same. For example, assuming that the access network device sends four first synchronization signal blocks in the periodicity for sending the first synchronization signal block and sends eight second synchronization signal blocks in the periodicity for sending the second synchronization signal block, four first synchronization signal blocks and eight second synchronization signal blocks that are sent by the access network device are included in each time range, and transmission patterns of the first synchronization signal block and the second synchronization signal block are the same in each time range. For example, in this time range, the access network device first sends the four first synchronization signal blocks and then sends the eight second synchronization signal blocks, and in one time range, time domain resource intervals between adjacent synchronization signal blocks are the same in each time range.

In this application, that the first synchronization signal block is associated with the at least one second synchronization signal block may be that the terminal device may determine and obtain, based on the first synchronization signal block, a time domain position of the at least one second synchronization signal block associated with the first synchronization signal block. It should be noted that, that the terminal device determines, based on the first synchronization signal block, the time domain position of the second synchronization signal block associated with the first synchronization signal block may be that the terminal device determines, based on at least one of the primary synchronization signal, the secondary synchronization signal, or the broadcast message included in the first synchronization signal block, the second synchronization signal block associated with the first synchronization signal block. Alternatively, optionally, that the first synchronization signal block sent by the access network device is associated with the at least one second synchronization signal block may also be understood as that the first synchronization signal block and the at least one second synchronization signal block associated with the first synchronization signal block correspond to a same transmit beam direction of the access network device. This is mainly considered that because the bandwidth capability of the narrowband terminal device is limited, the narrowband terminal device cannot receive the broadcast message in the first synchronization signal block, but can receive the primary synchronization signal and/or the secondary synchronization signal that are/is included in the first synchronization signal block, so that the at least one second synchronization signal block may be associated based on the primary synchronization signal and/or the secondary synchronization signal that are/is included in the detected first synchronization signal block.

Optionally, a time domain resource interval between the first synchronization signal block and the associated second synchronization signal block may be a predefined or preconfigured time domain resource interval.

The time domain resource interval between the first synchronization signal block and the associated second synchronization signal block may be a time domain resource interval between a start time domain position of the first synchronization signal block and a start time domain position of the associated second synchronization signal block, or a time domain resource interval between an end time domain position of the first synchronization signal block and an end time domain position of the associated second synchronization signal block, or a time domain resource interval between a start time domain position of the first synchronization signal block and an end time domain position of the associated second synchronization signal block, or a time domain resource interval between an end time domain position of the first synchronization signal block and a start time domain position of the associated second synchronization signal block. Alternatively, there may be any other case in which the time domain resource interval may be represented. This is not specifically limited herein, and is intended to clearly represent a position relationship between the time domain resource of the first synchronization signal block and the time domain resource of the second synchronization signal block.

If the access network device transmits one first synchronization signal block by using a plurality of OFDM symbols, the start time domain position of the first synchronization signal block may be a start time domain position of a specific OFDM symbol used to transmit the first synchronization signal block. For example, the start time domain position of the first synchronization signal block may be a start time domain position of the first OFDM symbol, or may be a start time domain position of another OFDM symbol. This is not specifically limited in this application. The end time domain position of the first synchronization signal block may be an end time domain position of a specific OFDM symbol used to transmit the first synchronization signal block. For example, the start time domain position of the first synchronization signal block may be an end time domain position of the last OFDM symbol, or may be an end time domain position of another OFDM symbol. This is not specifically limited in this application.

It should be noted that if the access network device transmits one second synchronization signal block by using a plurality of OFDM symbols, for descriptions of the start time domain position and the end time domain position of the second synchronization signal block, refer to the descriptions of the start time domain position and the end time domain position of the first synchronization signal block. Details are not described herein again.

If one first synchronization signal block is associated with two or more second synchronization signal blocks, the time domain resource interval between the first synchronization signal block and the associated second synchronization signal block may be understood as a time domain resource interval between the first synchronization signal block and one of the second synchronization signal blocks, for example, a time domain resource interval between the first synchronization signal block and the first second synchronization signal block in the plurality of associated second synchronization signal blocks.

One first synchronization signal block may be associated with a plurality of (greater than or equal to two) second synchronization signal blocks. If the first synchronization signal block and the second synchronization signal blocks associated with the first synchronization signal block are distributed in an FDM manner, the plurality of second synchronization signal blocks associated with the first synchronization signal block are also distributed in the FDM manner.

Optionally, a transmit beam direction, of the access network device, corresponding to the second synchronization signal block associated with the first synchronization signal block is the same as a beam direction in which the access network device sends the first synchronization signal block.

Optionally, time domain resource intervals between a same first synchronization signal block and different associated second synchronization signal blocks may be the same or may be different.

For example, assuming that the first synchronization signal block (a synchronization signal block 1) is associated with two second synchronization signal blocks (which are respectively a synchronization signal block 2 and a synchronization signal block 3), a time domain resource interval between the synchronization signal block 1 and the synchronization signal block 2 may be a first preset time domain resource interval, and a time domain resource interval between the synchronization signal block 1 and the synchronization signal block 3 may be a second preset time domain resource interval. When the plurality of second synchronization signal blocks associated with the same first synchronization signal block are distributed in the FDM manner, in other words, time domain resources corresponding to the plurality of second synchronization signal blocks are the same, but are staggered in frequency, the first preset time domain resource interval and the second preset time domain resource interval are the same. When the plurality of second synchronization signal blocks associated with the same first synchronization signal block are distributed in a TDM manner, in other words, time domain resources corresponding to the plurality of second synchronization signal blocks are different, the first preset time domain resource interval and the second preset time domain resource interval are different. It should be noted that both the first preset time domain resource interval and the second preset time domain resource interval shown herein may be predefined or preconfigured.

Optionally, time domain resource intervals between different first synchronization signal blocks and associated second synchronization signal blocks may be the same or may be different.

For example, a time domain resource interval between the first synchronization signal block (a synchronization signal block 1) and the associated second synchronization signal block (a synchronization signal block 2) is a first preset time domain resource interval, a time domain resource interval between the first synchronization signal block (a synchronization signal block 3) and the associated second synchronization signal block (a synchronization signal block 4) is a second preset time domain resource interval, and the first preset time domain resource interval and the second preset time domain resource interval may be the same or may be different. It should be noted that both the first preset time domain resource interval and the second preset time domain resource interval shown herein may be predefined or preconfigured.

Optionally, in one periodicity, each first synchronization signal block is associated with a same quantity of second synchronization signal blocks. In one periodicity, a quantity of second synchronization signal blocks associated with each first synchronization signal block is preset. In this way, combined detection complexity of the terminal device can be reduced. For example, the second synchronization signal block includes only the broadcast message. The terminal device that accesses the access network device by using the second synchronization signal block needs to first obtain synchronization information by using the primary synchronization signal and the secondary synchronization signal in the first synchronization signal block. If in one periodicity, each first synchronization signal block is associated with a different quantity of second synchronization signal blocks, the terminal device further needs to assume a quantity of second synchronization signal blocks associated with the first synchronization signal block, and performs combined detection based on the assumed quantity. This increases complexity of accessing a system by the terminal device. On the contrary, if each first synchronization signal block is associated with the same quantity of second synchronization signal blocks, the terminal device determines a quantity of second synchronization signal blocks on which combined detection may be performed, thereby reducing combined detection complexity.

Optionally, in one periodicity, different first synchronization signal blocks may be associated with a same second synchronization signal block, or may be associated with different second synchronization signal blocks.

For example, refer to FIG. 4. Assuming that each first synchronization signal block may be associated with two second synchronization signal blocks, an association relationship between the first synchronization signal block and the second synchronization signal blocks may be that shown in Table 1.

**Table 1**

| First synchronization signal block | Associated second synchronization signal block | Time domain resource interval |
|---|---|---|
| Synchronization signal block 0 | Synchronization signal block 4 | T1 |
| | Synchronization signal block 5 | T2 |
| Synchronization signal block 1 | Synchronization signal block 6 | T3 |
| | Synchronization signal block 7 | T4 |
| Synchronization signal block 2 | Synchronization signal block 8 | T5 |
| | Synchronization signal block 9 | T6 |
| Synchronization signal block 3 | Synchronization signal block 10 | T7 |
| | Synchronization signal block 11 | T8 |

In Table 1, time domain resource intervals between a same first synchronization signal block and second synchronization signal blocks associated with the same first synchronization signal block may be the same or may be different. For example, T1 may be equal to T2, or T1 is not equal to T2. Time domain resource intervals between different first synchronization signal blocks and second synchronization signal blocks associated with the different first synchronization signal blocks may be the same or may be different. For example, T1=T3 and T2=T4, but T1 may not be equal to T2.

It should be noted that, to ensure that the terminal device correctly demodulates the broadcast message, all synchronization signal blocks including a primary synchronization signal and/or a secondary synchronization signal may be associated with a broadcast message. Herein, that all synchronization signal blocks including a primary synchronization signal and/or a secondary synchronization signal may be associated with a broadcast message may be understood as that the terminal device may determine, based on a detected primary synchronization signal and/or a detected secondary synchronization signal, a time domain resource corresponding to the broadcast message sent by the access network device, and then demodulate the broadcast message carried on the time domain resource. This is because usually, the terminal device first obtains the synchronization information of the access network device by using the primary synchronization signal and the secondary synchronization signal, and then detects, based on the synchronization information, the broadcast message sent by the access network device. If a synchronization signal block including a primary synchronization signal and a secondary synchronization signal is associated with the broadcast message, and a synchronization signal block including a primary synchronization signal and a secondary synchronization signal is not associated with the broadcast message, in a process in which the terminal device detects the broadcast message after determining the synchronization information, the terminal device may detect the broadcast message on a time domain resource on which no broadcast message is sent, or incorrectly combine broadcast messages. Consequently, power consumption of the terminal device is increased and the broadcast message cannot be effectively and correctly demodulated. Therefore, to ensure that the terminal device correctly demodulates the broadcast message and power consumption of the terminal device is reduced, all the synchronization signal blocks including the primary synchronization signal and the secondary synchronization signal may be associated with the broadcast message. Optionally, the associated broadcast message is a broadcast message included in the second synchronization signal block, namely, a broadcast message that needs to be received by the narrowband terminal device.

For example, the first synchronization signal block includes the primary synchronization signal and the secondary synchronization signal. Therefore, the first synchronization signal block is associated with a broadcast message. When the second synchronization signal block includes the primary synchronization signal and the secondary synchronization signal, the second synchronization signal block is also associated with the broadcast message. Alternatively, when the second synchronization signal block includes the primary synchronization signal and the secondary synchronization signal, and the terminal device receives the primary synchronization signal and/or the secondary synchronization signal, if the terminal device may determine whether the primary synchronization signal and/or the secondary synchronization signal belong/belongs to the first synchronization signal block or the second synchronization signal block, the first synchronization signal block or the second synchronization signal block may not be associated with the broadcast message. It should be noted that the broadcast message mentioned herein may be the broadcast message that needs to be received by the narrowband terminal device. That the second synchronization signal block may not be associated with the broadcast message means that the second synchronization signal block may not be associated with a broadcast message in another synchronization signal block, and the second synchronization signal block still includes the broadcast message.

S203: The terminal device receives the second synchronization signal block sent by the access network device.

Optionally, the terminal device may perform blind detection, to receive the second synchronization signal block sent by the access network device.

Optionally, the terminal device may first receive the primary synchronization signal and the secondary synchronization signal in the first synchronization signal block, and implement synchronization with the access network device by using the primary synchronization signal and the secondary synchronization signal. Then, the terminal device may receive the second synchronization signal block.

Optionally, if the time domain resource interval between the first synchronization signal block and the second synchronization signal block is a predefined or preconfigured time domain resource interval, after receiving the primary synchronization signal and the secondary synchronization signal in the first synchronization signal block, the terminal device may determine a time domain position of the second synchronization signal block based on the time domain resource interval between the first synchronization signal block and the second synchronization signal block and a time domain position of the first synchronization signal block, and receive the second synchronization signal block based on the time domain position of the second synchronization signal block.

Optionally, the terminal device may further receive the broadcast message in a partial frequency domain bandwidth of the first synchronization signal block from the access network device, for example, in an allowed bandwidth range.

S204: The terminal device obtains the broadcast message based on the second synchronization signal block.

Optionally, the terminal device may receive the physical broadcast channel, and demodulate the physical broadcast channel to obtain the broadcast message. The physical broadcast channel herein may be obtained based on the second synchronization signal block, or may be obtained based on the first synchronization signal block and the second synchronization signal block.

Optionally, after the terminal device obtains the broadcast message, the terminal device may obtain the configuration information of the access network device based on the broadcast message. Optionally, the terminal device in the idle state may further request to access the access network device based on the configuration information of the access network device.

According to the communications method provided in this application, the access network device may send the first synchronization signal block and the second synchronization signal block, and the frequency bandwidth of the broadcast message in the first synchronization signal block is greater than the frequency bandwidth of the broadcast message in the second synchronization signal block. In a communication process, the narrowband terminal may receive the broadcast message in the second synchronization signal block, and obtain the configuration information of the access network device based on the broadcast message in the second synchronization signal block. A broadband terminal may receive the broadcast message in the first synchronization signal block, and may also receive the broadcast message in the second synchronization signal block, so that the broadband terminal may obtain the configuration information of the access network device based on the broadcast message in the first synchronization signal block or the second synchronization signal block. In this way, both the broadband terminal and the narrowband terminal may obtain the broadcast message sent by the access network device, so that both the broadband terminal and the narrowband terminal may obtain the configuration information of the access network device, thereby ensuring reliability of data transmission between terminal devices with different bandwidths, especially, the narrowband terminal and the access network device.

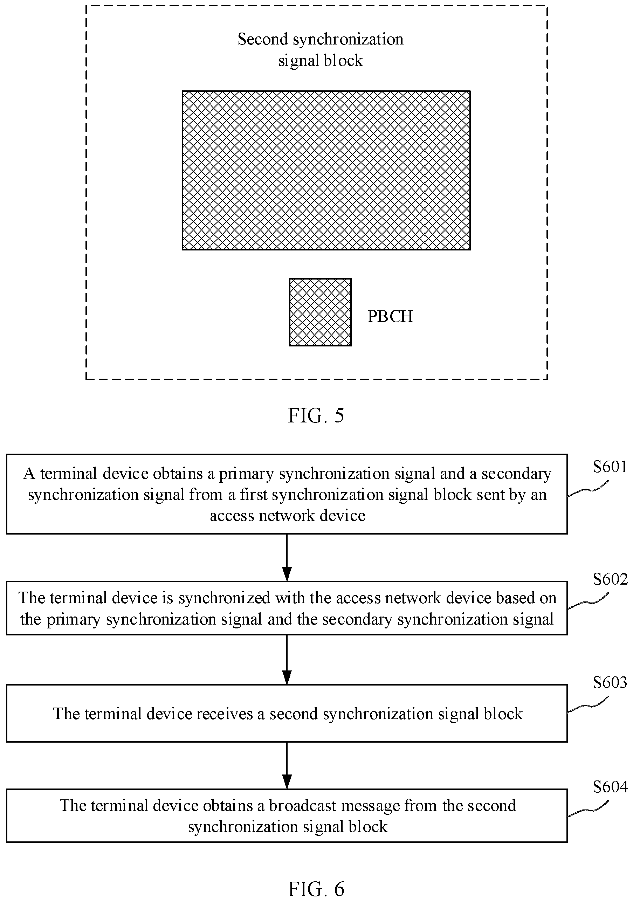

With reference to the embodiments shown in FIG. 5 to FIG. 13, the following describes a structure of a second synchronization signal block and a process in which a terminal device obtains a broadcast message.

In a first possible case, the second synchronization signal block includes a broadcast message and does not include a primary synchronization signal and a secondary synchronization signal.

FIG. 5 is a schematic structural diagram of a second synchronization signal block according to this application. Refer to FIG. 5. The second synchronization signal block includes a broadcast message, and a frequency bandwidth of the broadcast message in the second synchronization signal block is less than a frequency bandwidth of a broadcast message in a first synchronization signal block. In FIG. 5, a physical broadcast channel carrying the broadcast message is represented by using a PBCH.

A frequency bandwidth of the second synchronization signal block is less than the frequency bandwidth of the broadcast message in the first synchronization signal block. For example, when the first synchronization signal block is that shown in FIG. 3, the frequency bandwidth of the second synchronization signal block is less than a frequency bandwidth corresponding to 20 RBs.

Optionally, the frequency bandwidth of the second synchronization signal block may be equal to a frequency bandwidth of a primary synchronization signal and a secondary synchronization signal in the first synchronization signal block. For example, when the first synchronization signal block is that shown in FIG. 3, the frequency bandwidth of the second synchronization signal block may be a frequency bandwidth corresponding to 12 RBs. In this way, for a narrowband terminal, namely, a device that can access a system only by using the broadcast message in the second synchronization signal block, a bandwidth capability of the narrowband terminal device may be unified. To be specific, a maximum frequency bandwidth capability of the narrowband terminal device may be 12 RBs. In this way, the narrowband terminal may access the system by using the primary synchronization signal and the secondary synchronization signal in the first synchronization signal block and the broadcast message in the second synchronization signal block.

It should be noted that, in an actual application process, a time domain resource (a quantity of occupied OFDM symbols) and a frequency bandwidth that are occupied by the second synchronization signal block may be set based on an actual requirement. This is not specifically limited in this application.

When the second synchronization signal block is that shown in FIG. 5, the process in which the terminal device obtains the broadcast message is described in detail below with reference to FIG. 6.

FIG. 6 is a schematic flowchart of another communications method according to this application. Refer to FIG. 6. The method may include the following steps.

S601: A terminal device obtains a primary synchronization signal and a secondary synchronization signal from a first synchronization signal block sent by an access network device.

Optionally, the terminal device may perform blind detection, to receive the primary synchronization signal and the secondary synchronization signal in the first synchronization signal block sent by the access network device.

Optionally, the terminal device may be a narrowband terminal.

S602: The terminal device is synchronized with the access network device based on the primary synchronization signal and the secondary synchronization signal.

It should be noted that for a process of performing S602, refer to a process in which the terminal device is synchronized with the access network device by using the primary synchronization signal and the secondary synchronization signal in a conventional technology. Details are not described herein.

In S602, the terminal device may further obtain cell information, for example, a cell identifier, based on the primary synchronization signal and the secondary synchronization signal.

S603: The terminal device receives a second synchronization signal block.

Optionally, the terminal device may perform blind detection, to receive the second synchronization signal block sent by the access network device.

S604: The terminal device obtains a broadcast message from the second synchronization signal block.

Optionally, because the second synchronization signal block includes the broadcast message, the terminal device may demodulate a physical broadcast channel on which the broadcast message is transmitted, to obtain the broadcast message.

After the terminal device obtains the broadcast message, the terminal device may obtain configuration information of the access network device based on the broadcast message.

In the embodiment shown in FIG. 6, the narrowband terminal may be synchronized with the access network device by using the primary synchronization signal and the secondary synchronization signal in the first synchronization signal block, and obtain the broadcast message from the second synchronization signal block, so that the terminal device may obtain the configuration information of the access network device, thereby improving communication reliability. Because the terminal device may use the primary synchronization signal and the secondary synchronization signal in the first synchronization signal block, standard design complexity is reduced. The second synchronization signal block does not include a primary synchronization signal and a secondary synchronization signal. Therefore, when a size of a time domain resource corresponding to the second synchronization signal block is the same as a size of a time domain resource corresponding to the first synchronization signal block, the broadcast message in the second synchronization signal block may be transmitted by using more time domain resources, thereby ensuring coverage performance of the broadcast message. A broadband terminal may obtain configuration information of the access network device by using the method shown in the embodiment of FIG. 5. The broadband terminal may further obtain the configuration information of the access network device based on the first synchronization signal block. Specifically, the broadband terminal may be synchronized with the access network device based on the primary synchronization signal and the secondary synchronization signal in the first synchronization signal block, obtain a broadcast message in the first synchronization signal block, and obtain the configuration information of the access network device based on the broadcast message.

In a second possible case, the second synchronization signal block includes a broadcast message, a primary synchronization signal, and a secondary synchronization signal.

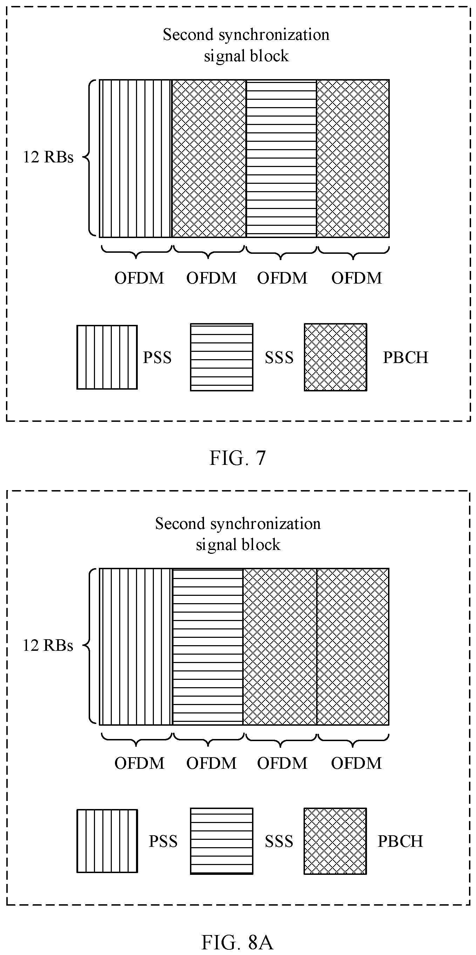

FIG. 7 is a schematic structural diagram of another second synchronization signal block according to this application. Refer to FIG. 7. The second synchronization signal block includes a broadcast message, a primary synchronization signal, and a secondary synchronization signal, and a frequency bandwidth of the broadcast message in the second synchronization signal block is less than a frequency bandwidth of a broadcast message in a first synchronization signal block. In FIG. 7, the broadcast message is represented by using a PBCH.

Optionally, information carried in a primary synchronization signal in the first synchronization signal block sent by an access network device in one periodicity may be the same as information carried in the primary synchronization signal in the second synchronization signal block. A signal carried in a secondary synchronization signal in the first synchronization signal block sent by the access network device in one periodicity may be the same as information carried in the secondary synchronization signal in the second synchronization signal block.

Optionally, a frequency bandwidth of the primary synchronization signal included in the second synchronization signal block is the same as a frequency bandwidth of the primary synchronization signal included in the first synchronization signal block, and a frequency bandwidth of the secondary synchronization signal included in the second synchronization signal block is the same as a frequency bandwidth of the secondary synchronization signal included in the first synchronization signal block.

For example, it is assumed that the first synchronization signal block is that shown in FIG. 3, and the second synchronization signal block is that shown in FIG. 7. Refer to FIG. 7. In time domain, the second synchronization signal block occupies four OFDM symbols. In frequency domain, the second synchronization signal block occupies 12 RBs. The primary synchronization signal in the second synchronization signal block occupies 12 RBs in the first OFDM symbol (which are the same as RBs occupied by the primary synchronization signal block in the first synchronization signal block in the embodiment of FIG. 3), the secondary synchronization signal occupies 12 RBs on the third OFDM symbol (which are the same as RBs occupied by the secondary synchronization signal block in the first synchronization signal block in the embodiment of FIG. 3), and the broadcast message (or the PBCH) occupies 12 RBs on each of the second OFDM symbol and the third OFDM symbol.

Optionally, the frequency bandwidth corresponding to the broadcast message in the second synchronization signal block is equal to the frequency bandwidth corresponding to the primary synchronization signal in the second synchronization signal block and the frequency bandwidth corresponding to the secondary synchronization signal in the second synchronization signal block. In this way, signal detection complexity of accessing the access network device by a narrowband terminal can be simplified.

For example, assuming that the frequency bandwidth corresponding to each of the primary synchronization signal and the secondary synchronization signal in the second synchronization signal block is 12 RBs, the frequency bandwidth corresponding to the broadcast message in the second synchronization signal block is 12 RBs.

In the embodiment shown in FIG. 7, the frequency bandwidth of the primary synchronization signal included in the second synchronization signal block is the same as the frequency bandwidth of the primary synchronization signal included in the first synchronization signal block, and the frequency bandwidth of the secondary synchronization signal included in the second synchronization signal block is the same as the frequency bandwidth of the secondary synchronization signal included in the first synchronization signal block, so that a terminal device may detect the primary synchronization signal and the secondary synchronization signal in the first synchronization signal block on a same frequency, and detect the primary synchronization signal and the secondary synchronization signal in the second synchronization signal block. In this way, a bandwidth capability requirement for the terminal device can be reduced, and synchronization detection performance of the terminal device can be improved.

In the embodiment shown in FIG. 7, optionally, a sequence of the primary synchronization signal included in the second synchronization signal block may be the same as or different from a sequence of the primary synchronization signal included in the first synchronization signal block. A sequence of the secondary synchronization signal included in the second synchronization signal block may be the same as or different from a sequence of the secondary synchronization signal included in the first synchronization signal block.

When the sequence of the primary synchronization signal included in the second synchronization signal block is the same as the sequence of the primary synchronization signal included in the first synchronization signal block, and the sequence of the secondary synchronization signal included in the second synchronization signal block is the same as the sequence of the secondary synchronization signal included in the first synchronization signal block, for a terminal device that can use both synchronization signals (the primary synchronization signal and the secondary synchronization signal) included in the first synchronization signal block and synchronization signals included in the second synchronization signal block, sequence detection complexity is reduced, and standard design complexity can be further reduced.

Optionally, that sequences are the same may mean that types of the sequences are the same or elements included in the sequences are the same. That sequences are different may mean that types of the sequences are different or elements included in the sequences are different.

It should be noted that FIG. 7 shows only an example of the structure and the quantity of occupied resources of the second synchronization signal block, and does not limit the structure and the quantity of occupied resources of the second synchronization signal block.

Based on the embodiment in FIG. 7, after the terminal device obtains the primary synchronization signal and the secondary synchronization signal through detection, to enable the terminal device to determine a specific synchronization signal block (the first synchronization signal block or the second synchronization signal block) to which the detected primary synchronization signal and the detected secondary synchronization signal belong, a time domain resource interval between the primary synchronization signal and the secondary synchronization signal in the second synchronization signal block may be changed. For details, refer to the second synchronization signal blocks shown in FIG. 8A to FIG. 8D.

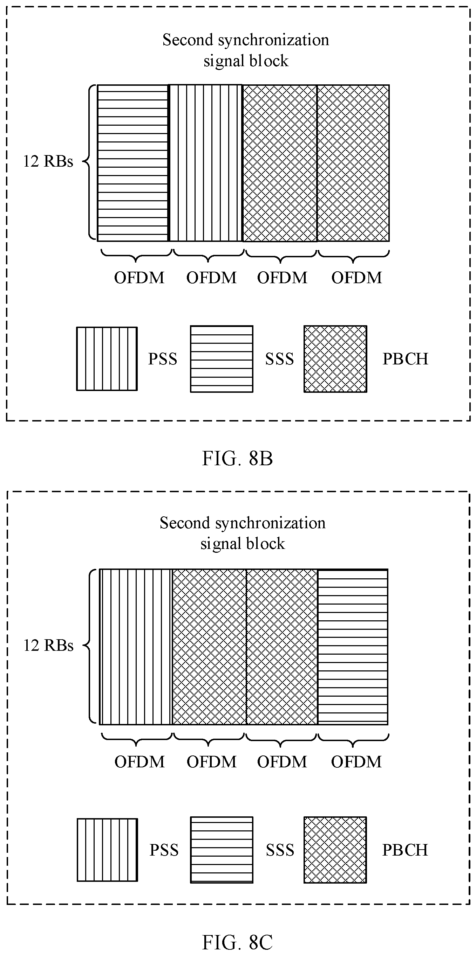

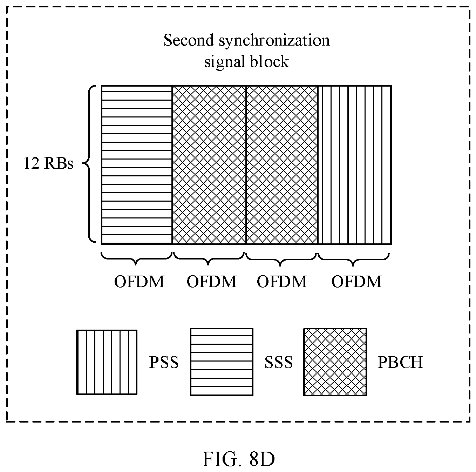

FIG. 8A is a schematic structural diagram of still another second synchronization signal block according to this application. FIG. 8B is a schematic structural diagram of yet another second synchronization signal block according to this application. FIG. 8C is a schematic structural diagram of still yet another second synchronization signal block according to this application. FIG. 8D is a schematic structural diagram of a further second synchronization signal block according to this application. Based on the embodiment in FIG. 7, refer to FIG. 8A to FIG. 8D. The second synchronization signal block includes a broadcast message, a primary synchronization signal, and a secondary synchronization signal. In time domain, the second synchronization signal block occupies four OFDM symbols. In frequency domain, the first synchronization signal block occupies 12 RBs. In FIG. 8A to FIG. 8D, the broadcast message is represented by using a PBCH.

Assuming that a time domain resource interval between a primary synchronization signal and a secondary synchronization signal that are included in a first synchronization signal block is a first time domain resource interval, and a time domain resource interval between the primary synchronization signal and the secondary synchronization signal that are included in the second synchronization signal block is a second time domain resource interval, the first time domain resource interval is different from the second time domain resource interval.

Optionally, a time domain resource interval between a primary synchronization signal and a secondary synchronization signal may be a quantity of OFDM symbols from a start OFDM symbol occupied by the primary synchronization signal to a start OFDM symbol occupied by the secondary synchronization signal. The time domain resource interval may be a positive number, or may be a negative number. When the start OFDM symbol of the secondary synchronization signal is after the start OFDM symbol of the primary synchronization signal (to be specific, in time domain, an access network device first sends the primary synchronization signal and then sends the secondary synchronization signal), the time domain resource interval between the primary synchronization signal and the secondary synchronization signal is a number greater than 0. When the start OFDM symbol of the secondary synchronization signal is before the start OFDM symbol of the primary synchronization signal (to be specific, in time domain, the access network device first sends the secondary synchronization signal and then sends the primary synchronization signal), the time domain resource interval between the primary synchronization signal and the secondary synchronization signal is a number less than 0. When the start OFDM symbol of the secondary synchronization signal is the same as the start OFDM symbol of the primary synchronization signal, the time domain resource interval between the primary synchronization signal and the secondary synchronization signal is 0.

Optionally, a time domain resource interval between a primary synchronization signal and a secondary synchronization signal may be a quantity of OFDM symbols from a start OFDM symbol occupied by the secondary synchronization signal to a start OFDM symbol occupied by the primary synchronization signal. The time domain resource interval may be a positive number, or may be a negative number. When the start OFDM symbol of the secondary synchronization signal is after the start OFDM symbol of the primary synchronization signal (to be specific, in time domain, an access network device first sends the primary synchronization signal and then sends the secondary synchronization signal), the time domain resource interval between the primary synchronization signal and the secondary synchronization signal is a number less than 0. When the start OFDM symbol of the secondary synchronization signal is before the start OFDM symbol of the primary synchronization signal (to be specific, in time domain, the access network device first sends the secondary synchronization signal and then sends the primary synchronization signal), the time domain resource interval between the primary synchronization signal and the secondary synchronization signal is a number greater than 0. When the start OFDM symbol of the secondary synchronization signal is the same as the start OFDM symbol of the primary synchronization signal, the time domain resource interval between the primary synchronization signal and the secondary synchronization signal is 0.

It should be noted that in the following examples, an example in which the time domain resource interval between the primary synchronization signal and the secondary synchronization signal is the quantity of OFDM symbols from the start OFDM symbol occupied by the primary synchronization signal to the start OFDM symbol occupied by the secondary synchronization signal is used for description.

For example, assuming that the first synchronization signal block is that shown in FIG. 3, and the time domain resource interval between the primary synchronization signal and the secondary synchronization signal is a time domain resource interval between the start OFDM symbol of the primary synchronization signal and the start OFDM of the secondary synchronization signal, the time domain resource interval between the primary synchronization signal and the secondary synchronization signal in the first synchronization signal block is two OFDM symbols.

Refer to FIG. 8A. A primary synchronization signal occupies 12 RBs on the first OFDM symbol, a secondary synchronization signal occupies 12 RBs on the second OFDM symbol, and a broadcast message (or a PBCH) occupies 12 RBs on each of the third OFDM symbol and the fourth OFDM symbol. In FIG. 8A, because the access network device first sends the primary synchronization signal and then sends the secondary synchronization signal and there is one OFDM symbol between the primary synchronization signal and the secondary synchronization signal, the time domain resource interval between the primary synchronization signal and the secondary synchronization signal in the second synchronization signal block is one OFDM symbol, and is different from the time domain resource interval (two OFDM symbols) between the primary synchronization signal and the secondary synchronization signal in the first synchronization signal block.

Refer to FIG. 8B. A primary synchronization signal occupies 12 RBs on the second OFDM symbol, a secondary synchronization signal occupies 12 RBs on the first OFDM symbol, and a broadcast message (or a PBCH) occupies 12 RBs on each of the third OFDM symbol and the fourth OFDM symbol. In FIG. 8B, because the access network device first sends the secondary synchronization signal and then sends the primary synchronization signal and there is one OFDM symbol between the primary synchronization signal and the secondary synchronization signal, the time domain resource interval between the primary synchronization signal and the secondary synchronization signal in the second synchronization signal block is -1 OFDM symbol, and is different from the time domain resource interval (two OFDM symbols) between the primary synchronization signal and the secondary synchronization signal in the first synchronization signal block.

Refer to FIG. 8C. A primary synchronization signal occupies 12 RBs on the first OFDM symbol, a secondary synchronization signal occupies 12 RBs on the fourth OFDM symbol, and a broadcast message (or a PBCH) occupies 12 RBs on each of the second OFDM symbol and the third OFDM symbol. In FIG. 8C, because the access network device first sends the primary synchronization signal and then sends the secondary synchronization signal and there are three OFDM symbols between the primary synchronization signal and the secondary synchronization signal, the time domain resource interval between the primary synchronization signal and the secondary synchronization signal in the second synchronization signal block is three OFDM symbols, and is different from the time domain resource interval (two OFDM symbols) between the primary synchronization signal and the secondary synchronization signal in the first synchronization signal block.

Refer to FIG. 8D. A primary synchronization signal occupies 12 RBs on the fourth OFDM symbol, a secondary synchronization signal occupies 12 RBs on the first OFDM symbol, and a broadcast message (or a PBCH) occupies 12 RBs on each of the second OFDM symbol and the third OFDM symbol. In FIG. 8B, because the access network device first sends the secondary synchronization signal and then sends the primary synchronization signal and there are three OFDM symbols between the primary synchronization signal and the secondary synchronization signal, the time domain resource interval between the primary synchronization signal and the secondary synchronization signal in the second synchronization signal block is -3 OFDM symbols, and is different from the time domain resource interval (two OFDM symbols) between the primary synchronization signal and the secondary synchronization signal in the first synchronization signal block.

It should be noted that the second time domain resource interval between the primary synchronization signal and the secondary synchronization signal in the second synchronization signal block may alternatively be another value. Examples are not listed one by one herein in this application.

In an actual application process, a broadband terminal preferentially obtains configuration information of the access network device based on the broadcast message in the first synchronization signal block, so that the broadband terminal may have relatively high communication efficiency. A narrowband terminal can obtain configuration information of the access network device based on only the broadcast message in the second synchronization signal block.

In the embodiment shown in FIG. 8A to FIG. 8D, after the terminal device receives the primary synchronization signal and the secondary synchronization signal, the terminal device may determine, based on the time domain resource interval between the primary synchronization signal and the secondary synchronization signal, whether to obtain the configuration information of the access network device based on the broadcast message in the synchronization signal block in which the primary synchronization signal and the secondary synchronization signal are located.

In the embodiment shown in FIG. 8A to FIG. 8D, the terminal device may first receive the primary synchronization signal, and is synchronized with the access network device based on the primary synchronization signal, for example, implement coarse synchronization with the access network device based on the primary synchronization signal, including time synchronization and/or frequency synchronization. The terminal device may accumulate received information by using a same periodicity for sending the primary synchronization signal. For example, the terminal device may use 5 milliseconds as a default periodicity for detecting the primary synchronization signal, and combine information received at intervals of 5 milliseconds. When the terminal device determines that the primary synchronization signal is detected, the primary synchronization signal may be the primary synchronization signal included in the first synchronization signal block, or may be the primary synchronization signal included in the second synchronization signal block. The broadband terminal may assume that a default periodicity for sending the secondary synchronization signal is 20 milliseconds, determine, based on a relative position of the primary synchronization signal and the secondary synchronization signal in the first synchronization signal block, a time position corresponding to the secondary synchronization signal in the first synchronization signal block, and accumulate, with reference to the default periodicity of 20 milliseconds, information received at the determined time position corresponding to the secondary synchronization signal, to determine whether the secondary synchronization signal is detected. The narrowband terminal may assume that a default periodicity for sending the secondary synchronization signal is 5 milliseconds, determine, based on a relative position between the primary synchronization signal and the secondary synchronization signal in the second synchronization signal block, a time position corresponding to the secondary synchronization signal in the second synchronization signal block, and accumulate, with reference to the default periodicity of 5 milliseconds, information received at the determined time position corresponding to the secondary synchronization signal, to determine whether the secondary synchronization signal is detected. Because the time domain resource interval between the primary synchronization signal and the secondary synchronization signal that are included in the first synchronization signal block is different from the time domain resource interval between the primary synchronization signal and the secondary synchronization signal that are included in the second synchronization signal block, different types of terminal devices (for example, the broadband terminal and the narrowband terminal) may directly determine, based on the detected primary synchronization signal, time domain positions of secondary synchronization signals included in different types of synchronization signal blocks (the first synchronization signal block and the second synchronization signal block), and then detect the secondary synchronization signal, thereby avoiding additional power consumption and reducing detection complexity.

For the broadband terminal, if the broadband terminal determines, based on the time domain resource interval between the primary synchronization signal and the secondary synchronization signal, that the primary synchronization signal and the secondary synchronization signal belong to the first synchronization signal block, the broadband terminal receives the broadcast message in the first synchronization signal block. Optionally, if the broadband terminal determines, based on the time domain resource interval between the primary synchronization signal and the secondary synchronization signal, that the primary synchronization signal and the secondary synchronization signal belong to the second synchronization signal block, the broadband terminal may be synchronized with the access network device based on the primary synchronization signal and the secondary synchronization signal, but does not receive the broadcast message in the second synchronization signal block. Optionally, if the broadband terminal determines, based on the time domain resource interval between the primary synchronization signal and the secondary synchronization signal, that the primary synchronization signal and the secondary synchronization signal belong to the second synchronization signal block, the broadband terminal may alternatively receive the broadcast message in the second synchronization signal block. In this way, when quality of a channel between the broadband terminal and the access network device deteriorates (for example, the broadband terminal enters an environment such as a basement or a tunnel), the broadband terminal may maintain data transmission with the access network device by using a technology (for example, a multi-repeated transmission technology) in which the narrowband terminal maintains data transmission and based on the broadcast message in the second synchronization signal block obtained in advance, and does not need to reestablish a narrowband data transmission link to the access network device. This reduces system overheads and implementation complexity of the broadband terminal, and also facilitates continuous service transmission and ensures user experience.

For the narrowband terminal, if the narrowband terminal determines, based on the time domain resource interval between the primary synchronization signal and the secondary synchronization signal, that the primary synchronization signal and the secondary synchronization signal belong to the second synchronization signal block, the narrowband terminal receives the broadcast message in the second synchronization signal block. If the narrowband terminal determines, based on the time domain resource interval between the primary synchronization signal and the secondary synchronization signal, that the primary synchronization signal and the secondary synchronization signal belong to the first synchronization signal block, the narrowband terminal may be synchronized with the access network device based on the primary synchronization signal and the secondary synchronization signal, but does not receive the broadcast message in the first synchronization signal.

When the time domain resource interval between the primary synchronization signal and the secondary synchronization signal that are included in the first synchronization signal block is different from the time domain resource interval between the primary synchronization signal and the secondary synchronization signal that are included in the second synchronization signal block, the terminal device may determine, based on the received primary synchronization signal and the received secondary synchronization signal, a specific synchronization signal block (the first synchronization signal block or the second synchronization signal block) to which the received primary synchronization signal and the received secondary synchronization signal belong. In this way, the terminal device does not need to unnecessarily detect the broadcast message, so that power consumption can be reduced, and effective data transmission can be ensured. The narrowband terminal device is used as an example. Although the narrowband terminal may detect the primary synchronization signal and the secondary synchronization signal in the first synchronization signal block, the narrowband terminal cannot receive the broadcast message included in the first synchronization signal block due to a limited bandwidth capability. If the narrowband terminal device cannot determine whether the received primary synchronization signal block and the received secondary synchronization signal block belong to the first synchronization signal block or the second synchronization signal block, the narrowband terminal unnecessarily detects the broadcast message in the first synchronization signal block after receiving the primary synchronization signal and the secondary synchronization signal in the first synchronization signal block.

It should be noted that FIG. 8A to FIG. 8D each show only an example of the structure of the second synchronization signal block and the quantity of occupied resources, and do not limit the structure of the second synchronization signal block and the quantity of occupied resources.

Based on the embodiment shown in FIG. 7, optionally, a sequence corresponding to the primary synchronization signal included in the first synchronization signal block is different from a sequence corresponding to the primary synchronization signal included in the second synchronization signal block, and/or a sequence corresponding to the secondary synchronization signal included in the first synchronization signal block is different from a sequence corresponding to the secondary synchronization signal included in the second synchronization signal block. In this way, the terminal device may determine, based on the detected primary synchronization signal and/or the detected secondary synchronization signal, a synchronization signal block type (namely, the first synchronization signal block or the second synchronization signal block) to which the detected synchronization signals (the primary synchronization signal and the secondary synchronization signal) belong, to avoid unnecessary power consumption when the terminal device detects the broadcast message, and reduce detection complexity of the terminal device.

For example, if the sequence corresponding to the primary synchronization signal included in the first synchronization signal block is different from the sequence corresponding to the primary synchronization signal block included in the second synchronization signal block, the terminal device may determine, based on the detected primary synchronization signal, a synchronization signal block type to which the received synchronization signal belongs. If the sequence corresponding to the secondary synchronization signal included in the first synchronization signal block is different from the sequence corresponding to the secondary synchronization signal block included in the second synchronization signal block, the terminal device may determine, based on the detected secondary synchronization signal, a synchronization signal block type to which the received synchronization signal belongs. If the sequence corresponding to the primary synchronization signal included in the first synchronization signal block is different from the sequence corresponding to the primary synchronization signal block included in the second synchronization signal block, and the sequence corresponding to the secondary synchronization signal included in the first synchronization signal block is different from the sequence corresponding to the secondary synchronization signal block included in the second synchronization signal block, the terminal device may determine, based on the detected primary synchronization signal and/or the detected secondary synchronization signal, a synchronization signal block type to which the received synchronization signals belong.

Based on the embodiment shown in FIG. 7, optionally, frequency domain positions of the first synchronization signal block and the second synchronization signal block are different. In this way, after the terminal device obtains the synchronization signals (the primary synchronization signal and the secondary synchronization signal) through detection, the terminal device may determine, based on a frequency domain position of the synchronization signals, the synchronization signal block type (the first synchronization signal block or the second synchronization signal block) to which the synchronization signals belong, to avoid unnecessary power consumption when the terminal device detects the broadcast message, and reduce detection complexity of the terminal device.

Optionally, the frequency domain position may be represented as an absolute frequency value. A frequency domain position of a synchronization signal block may be indicated by using a synchronization raster (Synchronization raster). Correspondingly, a synchronization raster corresponding to the first synchronization signal block is different from a synchronization raster corresponding to the second synchronization signal block. Generally, the terminal device usually detects the synchronization signal block based on a preset synchronization raster. If the synchronization raster corresponding to the first synchronization signal block is different from the synchronization raster corresponding to the second synchronization signal block, different types of terminal devices (the narrowband terminal and the broadband terminal) may separately detect the synchronization signal block based on respective preset synchronization rasters. For example, a synchronization raster for the broadband terminal is defined as N* 1200 kHz+M*50 kHz, where N and M are positive integers. A frequency position indicated by using a synchronization raster for the narrowband terminal is staggered with a frequency position indicated by using the synchronization raster for the broadband terminal. For example, the synchronization raster for the narrowband terminal may be defined as N*1200 kHz+M*50 kHz+Offset kHz, where Offset is not equal to M'*50, and/or is not equal to N'*1200.

When the second synchronization signal block also includes the primary synchronization signal and the secondary synchronization signal, and the primary synchronization signal and the secondary synchronization signal are the same as the primary synchronization signal and the secondary synchronization signal that are included in the first synchronization signal block, to be specific, the primary synchronization signals correspond to a same sequence, the secondary synchronization signals correspond to a same sequence, and the time domain resource intervals between the primary synchronization signals and the secondary synchronization signals in the synchronization signal blocks are also the same, the synchronization raster of the first synchronization signal block and the synchronization raster of the second synchronization signal block are set to be different, so that power consumption of detecting the broadcast message by the terminal device can be effectively reduced, and detection complexity can be reduced.

Optionally, a frequency bandwidth of the primary synchronization signal included in the first synchronization signal block is the same as a frequency bandwidth of the primary synchronization signal block included in the second synchronization signal block, and the sequence corresponding to the primary synchronization signal included in the first synchronization signal block is the same as the sequence corresponding to the primary synchronization signal included in the second synchronization signal block. A frequency bandwidth of the secondary synchronization signal included in the first synchronization signal block is the same as a frequency bandwidth of the secondary synchronization signal block included in the second synchronization signal block, and the sequence corresponding to the secondary synchronization signal included in the first synchronization signal block is the same as the sequence corresponding to the secondary synchronization signal included in the second synchronization signal block. The time domain resource interval between the primary synchronization signal and the secondary synchronization signal that are included in the first synchronization signal block is different from the time domain resource interval between the primary synchronization signal and the secondary synchronization signal that are included in the second synchronization signal block. In this way, synchronization detection performance of the terminal device can be improved, sequence detection complexity and standard design complexity can be reduced, and the terminal device may further determine, based on the frequency domain position of the synchronization signals, the synchronization signal block type (the first synchronization signal block or the second synchronization signal) to which the synchronization signals belong.

It should be noted that, in an actual application process, whether the frequency bandwidth of the primary synchronization signal included in the first synchronization signal block is the same as the frequency bandwidth of the primary synchronization signal block included in the second synchronization signal block, whether the sequence corresponding to the primary synchronization signal included in the first synchronization signal block is the same as the sequence corresponding to the primary synchronization signal included in the second synchronization signal block, whether the frequency bandwidth of the secondary synchronization signal included in the first synchronization signal block is the same as the frequency bandwidth of the secondary synchronization signal block included in the second synchronization signal block, whether the sequence corresponding to the secondary synchronization signal included in the first synchronization signal block is the same as the sequence corresponding to the secondary synchronization signal included in the second synchronization signal block, and whether the time domain resource interval between the primary synchronization signal and the secondary synchronization signal that are included in the first synchronization signal block is the same as the time domain resource interval between the primary synchronization signal and the secondary synchronization signal that are included in the second synchronization signal block may be determined based on an actual requirement. The foregoing plurality of cases may be randomly combined. This is not specifically limited in this application.

It should be noted that in this application, the structure of the second synchronization signal block (for example, the second synchronization signal block includes only the broadcast channel, or the second synchronization signal block includes the broadcast channel and at least one of the primary synchronization signal or the secondary synchronization signal) may be preconfigured, for example, according to a standard protocol specification, or may be notified by the access network device to the terminal device. Alternatively, the time domain resource and the frequency domain resource that are occupied by the second synchronization signal block may be preconfigured, for example, according to a standard protocol specification, or may be notified by the access network device to the terminal device. Alternatively, the second synchronization signal block associated with the first synchronization signal block may be preconfigured, for example, according to a standard protocol specification, or may be notified by the access network device to the terminal device. Further optionally, the access network device notifies the terminal device that broadcast signaling or terminal device-specific signaling may be used. The signaling may be radio resource control (Radio Resource Control, RRC) signaling, or may be physical layer signaling, for example, signaling sent on a physical layer control channel, or may be media access control (Media Access Control, MAC) signaling. This is not specifically limited in this application.

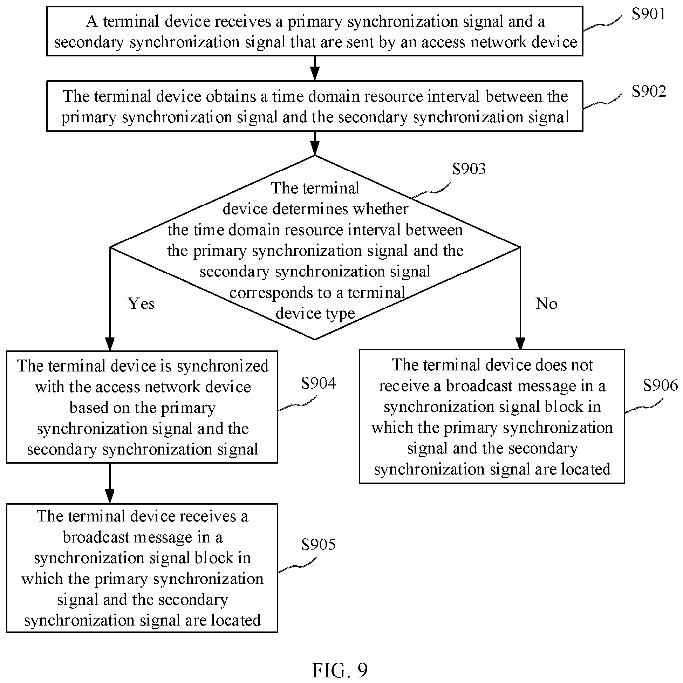

FIG. 9 is a schematic flowchart of still another communications method according to this application. Refer to FIG. 9. The method may include the following steps.

S901: A terminal device receives a primary synchronization signal and a secondary synchronization signal that are sent by an access network device.

Optionally, the terminal device may perform blind detection, to receive the primary synchronization signal and the secondary synchronization signal that are sent by the access network device.

Optionally, the primary synchronization signal block and the secondary synchronization signal block that are received by the terminal device may belong to a first synchronization signal block, or may belong to a second synchronization signal block.

S902: The terminal device obtains a time domain resource interval between the primary synchronization signal and the secondary synchronization signal.

Optionally, the terminal device may determine the time domain resource interval between the primary synchronization signal and the secondary synchronization signal based on a moment at which the primary synchronization signal is received and a moment at which the secondary synchronization signal is received.

S903: The terminal device determines whether the time domain resource interval between the primary synchronization signal and the secondary synchronization signal corresponds to a terminal device type.

If the time domain resource interval between the primary synchronization signal and the secondary synchronization signal corresponds to the terminal device type, S904 and S905 are performed.

If the time domain resource interval between the primary synchronization signal and the secondary synchronization signal does not correspond to the terminal device type, S906 is performed.

Optionally, the terminal device type includes a broadband terminal type and a narrowband terminal type.

Optionally, the broadband terminal device corresponds to a time domain resource interval between a primary synchronization signal and a secondary synchronization signal in the first synchronization signal block, and the narrowband terminal corresponds to a time domain resource interval between a primary synchronization signal and a secondary synchronization signal in the second synchronization signal block.

Optionally, a correspondence between the terminal device type and the time domain resource interval (the time domain resource interval between the primary synchronization signal and the secondary synchronization signal) may be preset.

For example, assuming that the first synchronization signal block is that shown in FIG. 3, and the second synchronization signal block is that shown in FIG. 8A, the correspondence may be that shown in Table 2.

**Table 2**

| Terminal device type | Time domain resource interval between a primary synchronization signal and a secondary synchronization signal |
|---|---|
| Broadband terminal type | Two OFDM symbols |
| Narrowband terminal type | One OFDM symbol |

S904: The terminal device is synchronized with the access network device based on the primary synchronization signal and the secondary synchronization signal.

It should be noted that for a process of performing S905, refer to a process in which the terminal device is synchronized with the access network device by using the primary synchronization signal and the secondary synchronization signal in a conventional technology. Details are not described herein.

In S904, the terminal device may further obtain cell information, for example, a cell identifier, based on the primary synchronization signal and the secondary synchronization signal.

S905: The terminal device receives a broadcast message in a synchronization signal block in which the primary synchronization signal and the secondary synchronization signal are located.

Optionally, if the terminal device is a broadband terminal, the primary synchronization signal and the secondary synchronization signal that are received by the terminal device belong to the first synchronization signal block, and the terminal device receives a broadcast message in the first synchronization signal block.

Optionally, if the terminal device is a narrowband terminal, the primary synchronization signal and the secondary synchronization signal that are received by the terminal device belong to the second synchronization signal block, and the terminal device receives a broadcast message in the second synchronization signal block.

Optionally, after the terminal device obtains the broadcast message, the terminal device may obtain configuration information of the access network device based on the broadcast message.

S906: The terminal device does not receive a broadcast message in a synchronization signal block in which the primary synchronization signal and the secondary synchronization signal are located.

Optionally, if the terminal device is a broadband terminal, the primary synchronization signal and the secondary synchronization signal that are received by the terminal device belong to the second synchronization signal block, and the terminal device does not receive a broadcast message in the second synchronization signal block.

Optionally, if the terminal device is a narrowband terminal, the primary synchronization signal and the secondary synchronization signal that are received by the terminal device belong to the first synchronization signal block, and the terminal device does not receive a broadcast message in the first synchronization signal block.

In the embodiment shown in FIG. 9, after the narrowband terminal device receives the primary synchronization signal and the secondary synchronization signal in the first synchronization signal block, the broadcast message in the first synchronization signal block cannot be detected by the narrowband terminal. Because the narrowband terminal may determine, based on the time domain resource interval between the received primary synchronization signal and the received secondary synchronization signal, not to receive the broadcast message in the first synchronization signal block, a waste of power consumption of the narrowband terminal is avoided. After the broadband terminal device receives the primary synchronization signal and the secondary synchronization signal in the second synchronization signal block, the broadband terminal cannot correctly receive the broadcast message in the second synchronization signal block by using a frequency bandwidth corresponding to the broadcast message in the first synchronization signal block. Because the broadband terminal may determine, based on the time domain resource interval between the received primary synchronization signal and the received secondary synchronization signal, not to receive the broadcast message in the second synchronization signal block, a waste of power consumption of the broadband terminal is avoided.

In a third possible case, the second synchronization signal block includes a broadcast message and a primary synchronization signal.

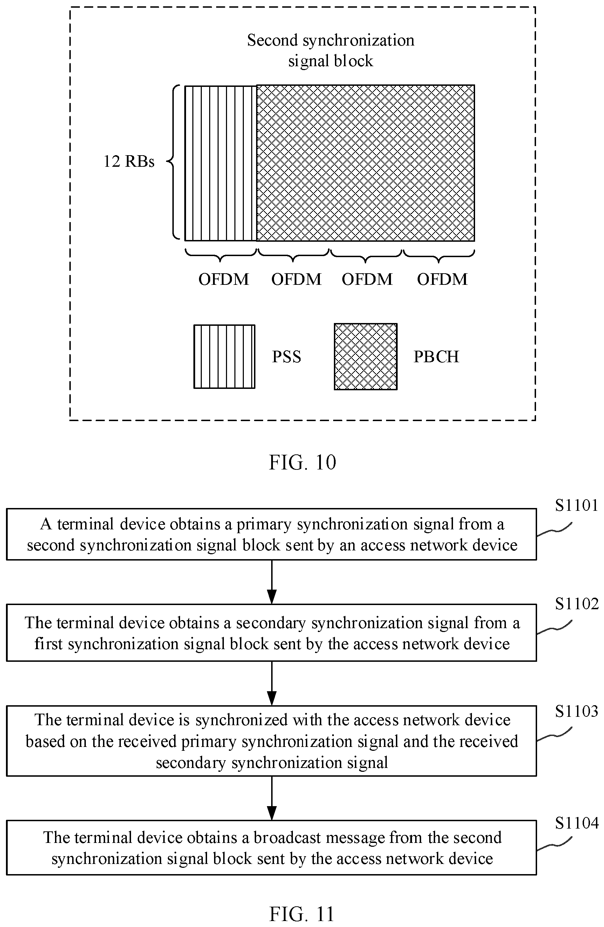

FIG. 10 is a schematic structural diagram of a still further second synchronization signal block according to this application. Refer to FIG. 10. The second synchronization signal block includes a broadcast message and a primary synchronization signal, and a frequency bandwidth of the broadcast message in the second synchronization signal block is less than a frequency bandwidth of a broadcast message in a first synchronization signal block. In FIG. 10, the broadcast message is represented by using a PBCH.

Optionally, a frequency bandwidth of the primary synchronization signal included in the second synchronization signal is the same as a frequency bandwidth of a primary synchronization signal included in the first synchronization signal block. In this way, a terminal device may obtain the primary synchronization signal in the first synchronization signal block and the primary synchronization signal in the second synchronization signal block on a same frequency through detection, thereby improving synchronization detection performance of the terminal device.

Optionally, a sequence of the primary synchronization signal block included in the second synchronization signal block is the same as a sequence of the primary synchronization signal block included in the first synchronization signal block. In this way, the terminal device may perform combined processing on the primary synchronization signal in the first synchronization signal block and the primary synchronization signal in the second synchronization signal block, thereby increasing a probability that the terminal device obtains the primary synchronization signal block through detection.

Optionally, the terminal device may receive the primary synchronization signal in the first synchronization signal block, and may also receive the primary synchronization signal in the second synchronization signal block. The terminal device may receive a secondary synchronization signal in the first synchronization signal block.

After a narrowband terminal is synchronized with an access network device based on the primary synchronization signal and the secondary synchronization signal, the narrowband terminal may obtain configuration information of the access network device based on the broadcast message in the second synchronization signal block.

Optionally, when the access network device sends the first synchronization signal block and the second synchronization signal block in the manner shown in FIG. 4, the narrowband terminal may receive the primary synchronization signal in a default periodicity of 5 milliseconds, and implement combination. For example, the narrowband terminal may accumulate energy in a 5-millisecond sliding window to receive the primary synchronization signal. After receiving the primary synchronization signal, the narrowband terminal may receive the secondary synchronization signal in a periodicity of 20 milliseconds, and implement combination. After receiving the primary synchronization signal, the narrowband terminal cannot determine a specific 5-millisecond time window to which the received primary synchronization signal belongs in a 20-millisecond time window. Therefore, the narrowband terminal cannot determine a position of the secondary synchronization signal. In this case, the narrowband terminal may perform a plurality of assumptions on the position of the secondary synchronization signal, and perform combination one by one based on the plurality of assumptions. In this way, the narrowband terminal may determine the position of the secondary synchronization signal based on a combination result (for example, an energy result) of the plurality of assumptions, to implement synchronization with the access network device and obtain cell information. To reduce complexity of detecting the secondary synchronization signal by the narrowband terminal, sequences corresponding to the primary synchronization signal in the first synchronization signal block and the primary synchronization signal in the second synchronization signal block may be different. Further optionally, FIG. 4 is used as an example. It is considered that in a 20-ms time window, time domain resource intervals between primary synchronization signals included in different second synchronization signal blocks and the secondary synchronization signal or the primary synchronization signal included in the first synchronization signal block are different. Therefore, sequences corresponding to the primary synchronization signals included in the different second synchronization signal blocks within 20 ms may be further configured to be different. In this way, the terminal device may uniquely determine, based on the detected primary synchronization signal, the time domain resource position of the secondary synchronization signal included in the first synchronization signal block, to detect the secondary synchronization signal.

After a broadband terminal is synchronized with the access network device based on the primary synchronization signal and the secondary synchronization signal, the broadband terminal preferentially obtains configuration information of the access network device based on the broadcast message in the first synchronization signal block. If the broadband terminal fails to detect the first synchronization signal block, the broadband terminal may further obtain configuration information of the access network device based on the broadcast message in the second synchronization signal block.

It should be noted that in this application, the configuration information (which may also be referred to as configuration information, of the access network device, associated with the first synchronization signal block) of the access network device obtained based on the broadcast message in the first synchronization signal block is different from the configuration information (which may also be referred to as configuration information, of the access network device, associated with the second synchronization signal block) of the access network device obtained based on the broadcast message in the second synchronization signal block. The configuration information, of the access network device, associated with the first synchronization signal block is applicable to the broadband terminal device, and the configuration information, of the access network device, associated with the second synchronization signal block is applicable to the narrowband terminal and the broadband terminal. When quality of a channel between the broadband terminal and the access network device is relatively good, compared with the configuration information, of the access network device, associated with the second synchronization signal block, the configuration information, of the access network device, associated with the first synchronization signal block may cause higher communication efficiency of the broadband terminal.

Optionally, the frequency bandwidth corresponding to the broadcast message in the second synchronization signal block is equal to the frequency bandwidth corresponding to the primary synchronization signal in the second synchronization signal block. In this way, signal detection complexity of obtaining the configuration information of the access network device by the narrowband terminal can be simplified.

For example, assuming that the frequency bandwidth corresponding to the primary synchronization signal in the second synchronization signal block is 12 RBs, the frequency bandwidth corresponding to the broadcast message in the second synchronization signal block is 12 RBs.

When the second synchronization signal block is that shown in FIG. 10, the process in which the terminal device obtains the broadcast message is described in detail below with reference to FIG. 11.

FIG. 11 is a schematic flowchart of yet another communications method according to this application. Refer to FIG. 11. The method may include the following steps.

S1101: A terminal device obtains a primary synchronization signal from a second synchronization signal block sent by an access network device.

It should be noted that the terminal device may further obtain a primary synchronization signal from a first synchronization signal block sent by the access network device.

Optionally, the terminal device may be a narrowband terminal.

S1102: The terminal device obtains a secondary synchronization signal from the first synchronization signal block sent by the access network device.

S1103: The terminal device is synchronized with the access network device based on the received primary synchronization signal and the received secondary synchronization signal.

It should be noted that for a process of performing S1103, refer to a process in which the terminal device is synchronized with the access network device by using the primary synchronization signal and the secondary synchronization signal in a conventional technology. Details are not described herein.

In S1103, the terminal device may further obtain cell information, for example, a cell identifier, based on the primary synchronization signal and the secondary synchronization signal.

S1104: The terminal device obtains a broadcast message from the second synchronization signal block sent by the access network device.

After the terminal device obtains the broadcast message, the terminal device may obtain configuration information of the access network device based on the broadcast message.

In the embodiment shown in FIG. 11, the narrowband terminal may be synchronized with the access network device by using the secondary synchronization signal in the first synchronization signal block and the primary synchronization signal in the second synchronization signal block, and obtain the broadcast message from the second synchronization signal block, so that the narrowband terminal may obtain the configuration information of the access network device, thereby improving communication reliability. A broadband terminal may obtain configuration information of the access network device by using the method shown in the embodiment in FIG. 11. The broadband terminal may further obtain the configuration information of the access network device based on the first synchronization signal block. Specifically, the broadband terminal may be synchronized with the access network device based on the primary synchronization signal and the secondary synchronization signal in the first synchronization signal block, obtain a broadcast message in the first synchronization signal block, and obtain the configuration information of the access network device based on the broadcast message.

In a fourth possible case, the second synchronization signal block includes a broadcast message and a secondary synchronization signal.

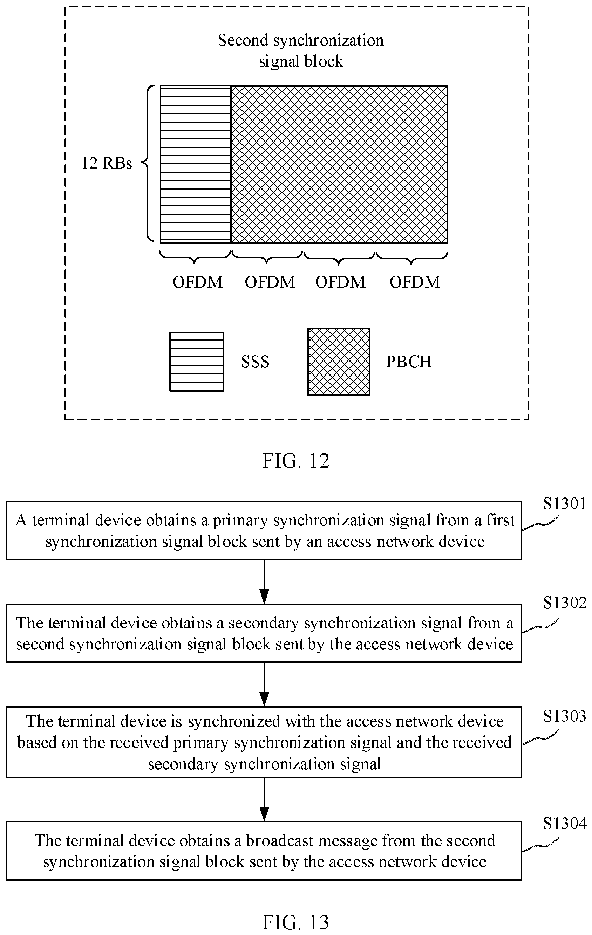

FIG. 12 is a schematic structural diagram of a yet further second synchronization signal block according to this application. Refer to FIG. 12. The second synchronization signal block includes a broadcast message and a secondary synchronization signal, and a frequency bandwidth of the broadcast message in the second synchronization signal block is less than a frequency bandwidth of a broadcast message in a first synchronization signal block. In FIG. 12, the broadcast message is represented by using a PBCH.

Optionally, a frequency bandwidth of the secondary synchronization signal included in the second synchronization signal is the same as a frequency bandwidth of a secondary synchronization signal included in the first synchronization signal block. In this way, a terminal device may obtain the secondary synchronization signal in the first synchronization signal block and the secondary synchronization signal in the second synchronization signal block on a same frequency through detection, thereby improving synchronization detection performance of the terminal device.

Optionally, a sequence of the secondary synchronization signal block included in the second synchronization signal block is the same as a sequence of the secondary synchronization signal block included in the first synchronization signal block. In this way, the terminal device may perform combined processing on the secondary synchronization signal in the first synchronization signal block and the secondary synchronization signal in the second synchronization signal block, thereby increasing a probability that the terminal device obtains the secondary synchronization signal block through detection.

For example, the terminal device may perform combined detection on secondary synchronization signals of an access network device in one periodicity.

Optionally, the terminal device may receive a primary synchronization signal in the first synchronization signal block. The terminal device may receive the secondary synchronization signal in the first synchronization signal block, and may also receive the secondary synchronization signal block in the second synchronization signal block.

After a narrowband terminal is synchronized with the access network device based on the primary synchronization signal and the secondary synchronization signal, the narrowband terminal may obtain configuration information of the access network device based on the broadcast message in the second synchronization signal block.

After a broadband terminal is synchronized with the access network device based on the primary synchronization signal and the secondary synchronization signal, the broadband terminal preferentially obtains configuration information of the access network device based on the broadcast message in the first synchronization signal block. If the broadband terminal fails to detect the first synchronization signal block, the broadband terminal may further obtain configuration information of the access network device based on the broadcast message in the second synchronization signal block.

Optionally, the frequency bandwidth corresponding to the broadcast message in the second synchronization signal block is equal to the frequency bandwidth corresponding to the secondary synchronization signal in the second synchronization signal block. In this way, signal detection complexity of obtaining the configuration information of the access network device by the narrowband terminal can be simplified.

For example, assuming that the frequency bandwidth corresponding to the secondary synchronization signal in the second synchronization signal block is 12 RBs, the frequency bandwidth corresponding to the broadcast message in the second synchronization signal block is 12 RBs.

When the second synchronization signal block is that shown in FIG. 12, the process in which the terminal device obtains the broadcast message is described in detail below with reference to FIG. 13.

FIG. 13 is a schematic flowchart of still yet another communications method according to this application. Refer to FIG. 13. The method may include the following steps.

S1301: A terminal device obtains a primary synchronization signal from a first synchronization signal block sent by an access network device.

Optionally, the terminal device may be a narrowband terminal.

S1302: The terminal device obtains a secondary synchronization signal from a second synchronization signal block sent by the access network device.

It should be noted that the terminal device may further obtain a secondary synchronization signal from the first synchronization signal block sent by the access network device. The terminal device may determine, based on the detected primary synchronization signal and a time domain resource interval between the primary synchronization signal in the first synchronization signal block and the secondary synchronization signal in the second synchronization signal block, a time domain resource position of the secondary synchronization signal in the second synchronization signal block. The time domain resource interval may be preconfigured, for example, according to a standard protocol specification, the second synchronization signal block associated with the first synchronization signal block or the secondary synchronization signal in the second synchronization signal block may also be preconfigured. The association herein may indicate that the terminal device may determine, based on the detected first synchronization signal block, a time domain resource position and/or a frequency domain resource position of the second synchronization signal block associated with the terminal device.

S1303: The terminal device is synchronized with the access network device based on the received primary synchronization signal and the received secondary synchronization signal.

It should be noted that for a process of performing S1303, refer to a process in which the terminal device is synchronized with the access network device by using the primary synchronization signal and the secondary synchronization signal in a conventional technology. Details are not described herein.

In S1303, the terminal device may further obtain cell information, for example, a cell identifier, based on the primary synchronization signal and the secondary synchronization signal.

S1304: The terminal device obtains a broadcast message from the second synchronization signal block sent by the access network device.

After the terminal device obtains the broadcast message, the terminal device may obtain configuration information of the access network device based on the broadcast message.

In the embodiment shown in FIG. 13, the narrowband terminal may be synchronized with the access network device by using the primary synchronization signal in the first synchronization signal block and the secondary synchronization signal in the second synchronization signal block, and obtain the broadcast message from the second synchronization signal block, so that the narrowband terminal may obtain the configuration information of the access network device, thereby improving communication reliability. A broadband terminal may obtain configuration information of the access network device by using the method shown in the embodiment of FIG. 13. The broadband terminal may further obtain the configuration information of the access network device based on the first synchronization signal block. Specifically, the broadband terminal may be synchronized with the access network device based on the primary synchronization signal and the secondary synchronization signal in the first synchronization signal block, obtain a broadcast message in the first synchronization signal block, and obtain the configuration information of the access network device based on the broadcast message.

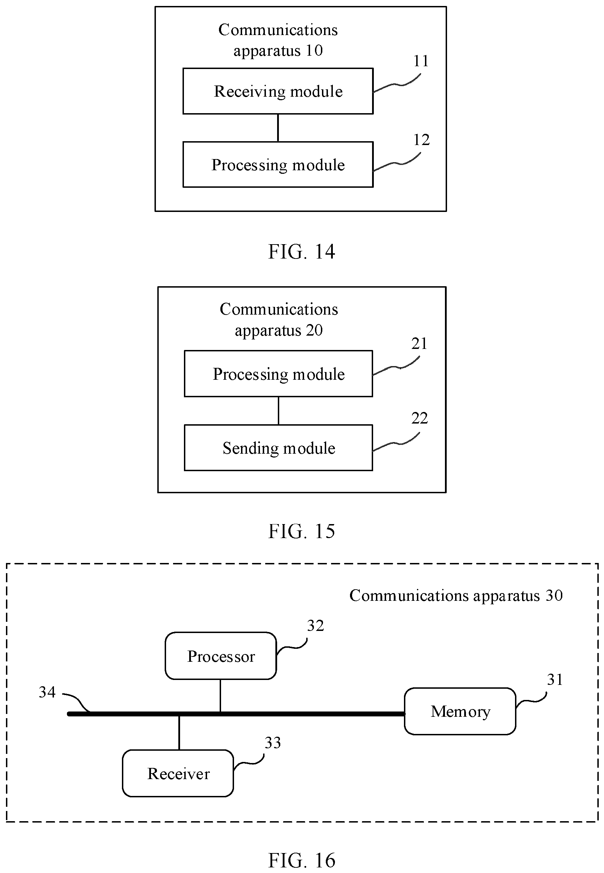

FIG. 14 is a schematic structural diagram of a communications apparatus according to this application. Refer to FIG. 14. The communications apparatus 10 may include:
a receiving module 11, configured to receive a second synchronization signal block sent by an access network device; and
a processing module 12, configured to obtain a broadcast message based on the second synchronization signal block, where
a frequency bandwidth of a broadcast message in the first synchronization signal block is greater than a frequency bandwidth of the broadcast message in the second synchronization signal block, and the first synchronization signal block corresponds to the access network device.

Optionally, the receiving module 11 may perform S203 in the embodiment in FIG. 2, S601 and S603 in the embodiment in FIG. 6, S901, S905, and S906 in the embodiment in FIG. 9, S1101, S1102, and S1104 in the embodiment in FIG. 11, and S1301, S1302, and S1304 in FIG. 13.

Optionally, the processing module 12 may perform S204 in the embodiment in FIG. 2, S602 and S604 in the embodiment in FIG. 6, S902 to S904 in the embodiment in FIG. 9, S1103 in the embodiment in FIG. 11, and S1303 in FIG. 13.

It should be noted that, in an actual application process, the processing module 12 may control the receiving module 11 to receive data.

It should be noted that the communications apparatus shown in this application may perform the technical solutions shown in the foregoing method embodiments. Implementation principles and beneficial effects of the communications apparatus are similar to those of the technical solutions, and details are not described herein again.

In a possible implementation, the first synchronization signal block further includes a primary synchronization signal and a secondary synchronization signal; and
the second synchronization signal block further includes at least one of a primary synchronization signal or a secondary synchronization signal.

In a possible implementation, the second synchronization signal block includes the primary synchronization signal and the secondary synchronization signal, a frequency bandwidth of the primary synchronization signal included in the second synchronization signal is the same as a frequency bandwidth of the primary synchronization signal included in the first synchronization signal block, and a frequency bandwidth of the secondary synchronization signal included in the second synchronization signal is the same as a frequency bandwidth of the secondary synchronization signal included in the first synchronization signal block.

In a possible implementation, a time domain resource interval between the primary synchronization signal and the secondary synchronization signal that are included in the first synchronization signal block is a first time domain resource interval; and
a time domain resource interval between the primary synchronization signal and the secondary synchronization signal that are included in the second synchronization signal block is a second time domain resource interval, where the first time domain resource interval is different from the second time domain resource interval.

In a possible implementation, the first synchronization signal block and the second synchronization signal block meet at least one of the following:
the second synchronization signal block includes the primary synchronization signal, and a sequence of the primary synchronization signal included in the second synchronization signal block is the same as a sequence of the primary synchronization signal included in the first synchronization signal block;
the second synchronization signal block includes the secondary synchronization signal, and a sequence of the secondary synchronization signal included in the second synchronization signal block is the same as a sequence of the secondary synchronization signal included in the first synchronization signal block;
the second synchronization signal block includes the primary synchronization signal, and a sequence corresponding to the primary synchronization signal included in the first synchronization signal block is different from a sequence corresponding to the primary synchronization signal included in the second synchronization signal block; and
the second synchronization signal block includes the secondary synchronization signal, and a sequence corresponding to the secondary synchronization signal included in the first synchronization signal block is different from a sequence corresponding to the secondary synchronization signal included in the second synchronization signal block.

In a possible implementation, in one periodicity, the first synchronization signal block is associated with at least one second synchronization signal block, and the at least one second synchronization signal block includes the second synchronization signal block.

In a possible implementation, a time domain resource interval between the first synchronization signal block and the at least one second synchronization signal block is a predefined or preconfigured time domain resource interval.

It should be noted that the communications apparatus shown in this application may perform the technical solutions shown in the foregoing method embodiments. Implementation principles and beneficial effects of the communications apparatus are similar to those of the technical solutions, and details are not described herein again.

FIG. 15 is a schematic structural diagram of another communications apparatus according to this application. Refer to FIG. 15. The communications apparatus 20 may include:
a processing module 21, configured to generate a first synchronization signal block and a second synchronization signal block, where a frequency bandwidth of a broadcast message in the first synchronization signal block is greater than a frequency bandwidth of a broadcast message in the second synchronization signal block; and
a sending module 22, configured to send the first synchronization signal block and the second synchronization signal block.

Optionally, the processing module 21 may perform S201 in the embodiment in FIG. 2.

Optionally, the sending module 22 may perform S202 in the embodiment in FIG. 2.

It should be noted that the communications apparatus shown in this application may perform the technical solutions shown in the foregoing method embodiments. Implementation principles and beneficial effects of the communications apparatus are similar to those of the technical solutions, and details are not described herein again.

In a possible implementation, the first synchronization signal block further includes a primary synchronization signal and a secondary synchronization signal; and
the second synchronization signal block further includes at least one of a primary synchronization signal or a secondary synchronization signal.

In a possible implementation, the second synchronization signal block includes the primary synchronization signal and the secondary synchronization signal, a frequency bandwidth of the primary synchronization signal included in the second synchronization signal is the same as a frequency bandwidth of the primary synchronization signal included in the first synchronization signal block, and a frequency bandwidth of the secondary synchronization signal included in the second synchronization signal is the same as a frequency bandwidth of the secondary synchronization signal included in the first synchronization signal block.

In a possible implementation, a time domain resource interval between the primary synchronization signal and the secondary synchronization signal that are included in the first synchronization signal block is a first time domain resource interval; and
a time domain resource interval between the primary synchronization signal and the secondary synchronization signal that are included in the second synchronization signal block is a second time domain resource interval, where the first time domain resource interval is different from the second time domain resource interval.

In a possible implementation, the first synchronization signal block and the second synchronization signal block meet at least one of the following:
the second synchronization signal block includes the primary synchronization signal, and a sequence of the primary synchronization signal included in the second synchronization signal block is the same as a sequence of the primary synchronization signal included in the first synchronization signal block;
the second synchronization signal block includes the secondary synchronization signal, and a sequence of the secondary synchronization signal included in the second synchronization signal block is the same as a sequence of the secondary synchronization signal included in the first synchronization signal block;
the second synchronization signal block includes the primary synchronization signal, and a sequence corresponding to the primary synchronization signal included in the first synchronization signal block is different from a sequence corresponding to the primary synchronization signal included in the second synchronization signal block; and
the second synchronization signal block includes the secondary synchronization signal, and a sequence corresponding to the secondary synchronization signal included in the first synchronization signal block is different from a sequence corresponding to the secondary synchronization signal included in the second synchronization signal block.

In a possible implementation, in one periodicity, the first synchronization signal block is associated with at least one second synchronization signal block, and the at least one second synchronization signal includes the second synchronization signal block.

In a possible implementation, in the periodicity, each first synchronization signal block is associated with a same quantity of second synchronization signal blocks.

In a possible implementation, a time domain resource interval between the first synchronization signal block and the at least one second synchronization signal block is a predefined or preconfigured time domain resource interval.

It should be noted that the communications apparatus shown in this application may perform the technical solutions shown in the foregoing method embodiments. Implementation principles and beneficial effects of the communications apparatus are similar to those of the technical solutions, and details are not described herein again.

It should be understood that the processing module in the communications apparatus may be implemented as a processor, the receiving module may be implemented as a receiver, and the sending module may be implemented as a transmitter.

FIG. 16 is a schematic diagram of a hardware structure of a communications apparatus according to this application. Refer to FIG. 16. The communications apparatus 30 includes a memory 31, a processor 32, and a receiver 33. The memory 31 communicates with the processor 32. For example, the memory 31, the processor 32, and the receiver 33 may communicate with each other by using a communications bus 34. The memory 31 is configured to store a computer program. The processor 32 executes the computer program to implement the foregoing communications method.

Optionally, the communications apparatus 30 may further include a transmitter.

Optionally, the processor 32 and/or the receiver 33 shown in this application may perform S202 and S203 in the embodiment shown in FIG. 2, and the methods in the embodiments shown in FIG. 6, FIG. 9, FIG. 11, and FIG. 13.

Optionally, the processor 32 shown in this application may implement a function of the processing module 12 in the embodiment in FIG. 14, and the receiver 33 may implement a function of the receiving module 11 in the embodiment in FIG. 14. Details are not described herein again.

Optionally, the processor may be a central processing unit (Central Processing Unit, CPU), or may be another general-purpose processor, a digital signal processor (Digital Signal Processor, DSP), an application specific integrated circuit (Application Specific Integrated Circuit, ASIC), or the like. The general-purpose processor may be a microprocessor, or the processor may be any conventional processor or the like. Steps in the communications method embodiments disclosed with reference to this application may be directly performed and accomplished by a hardware processor, or may be performed and accomplished by a combination of hardware and a software module in a processor.

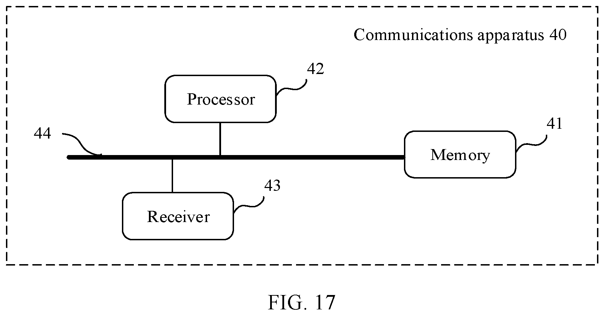

FIG. 17 is a schematic diagram of a hardware structure of a communications apparatus according to this application. Refer to FIG. 17. The communications apparatus 40 includes a memory 41, a processor 42, and a transmitter 43. The memory 41 communicates with the processor 42. For example, the memory 41, the processor 42, and the transmitter 43 may communicate with each other by using a communications bus 44. The memory 41 is configured to store a computer program. The processor 42 executes the computer program to implement the foregoing communications method.

Optionally, the communications apparatus 40 may further include a receiver.

Optionally, the processor 42 and/or the transmitter 43 shown in this application may perform S201 and S202 in the embodiment shown in FIG. 2.

Optionally, the processor 42 shown in this application may implement a function of the processing module 21 in the embodiment in FIG. 15, and the transmitter 43 may implement a function of the sending module 22 in the embodiment in FIG. 15. Details are not described herein again.

Optionally, the processor may be a central processing unit (Central Processing Unit, CPU), or may be another general-purpose processor, a digital signal processor (Digital Signal Processor, DSP), an application specific integrated circuit (Application Specific Integrated Circuit, ASIC), or the like. The general-purpose processor may be a microprocessor, or the processor may be any conventional processor or the like. Steps in the communications method embodiments disclosed with reference to this application may be directly performed and accomplished by a hardware processor, or may be performed and accomplished by a combination of hardware and a software module in a processor.

This application provides a storage medium. The storage medium is configured to store a computer program, and the computer program is used to implement the communications methods in the foregoing embodiments.

All or some of the steps in the method embodiments may be implemented by hardware related to program instructions. The foregoing program may be stored in a readable memory. When the program is executed, the steps in the foregoing method embodiments are performed. The foregoing memory (storage medium) includes: a read-only memory (English: read-only memory, ROM for short), a RAM, a flash memory, a hard disk, a solid-state drive, a magnetic tape (English: magnetic tape), a floppy disk (English: floppy disk), an optical disc (English: optical disc), and any combination thereof.

The embodiments of this application are described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a special-purpose computer, an embedded processor, or a processing unit of another programmable data processing device to generate a machine, so that instructions executed by the computer or the processing unit of the another programmable data processing device generate an apparatus for implementing a specific function in one or more processes in the flowcharts and/or in one or more blocks in the block diagrams.

These computer program instructions may alternatively be stored in a computer-readable memory that can instruct the computer or the another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto the computer or the another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

It is clear that a person skilled in the art can make various modifications and variations to the embodiments of this application. This application is intended to cover these modifications and variations provided that they fall within the scope of protection defined by the following claims.

In this application, the term "including" and a variant thereof may refer to non-limitative inclusion; and the term "or" and a variant thereof may refer to "and/or". In this application, the terms "first", "second", and the like are intended to distinguish between similar objects but do not necessarily indicate a specific order or sequence. In this application, "a plurality of" means two or more than two. The term "and/or" describes an association relationship between associated objects and indicates that three relationships may exist. For example, A and/or B may indicate the following three cases: Only A exists, both A and B exist, and only B exists. The character "/" usually indicates an "or" relationship between the associated objects.

## Claims

1. A communications method, comprising:
receiving (S203), by a narrowband terminal device (101), a second synchronization signal block sent by an access network device (102); and
obtaining (S204), by the narrowband terminal device (101), a broadcast message based on the second synchronization signal block, wherein
a frequency bandwidth of a broadcast message in a first synchronization signal block is greater than a frequency bandwidth of the broadcast message in the second synchronization signal block, the first synchronization signal block corresponds to the access network device (102), and the frequency bandwidth occupied by the broadcast message in the second synchronization signal block is less than or equal to a maximum frequency bandwidth of the narrowband terminal (101).

2. The method according to claim 1, wherein
the first synchronization signal block further comprises a primary synchronization signal and a secondary synchronization signal; and
the second synchronization signal block further comprises at least one of a primary synchronization signal or a secondary synchronization signal.

3. The method according to claim 2, wherein
the second synchronization signal block comprises the primary synchronization signal and the secondary synchronization signal, a frequency bandwidth of the primary synchronization signal comprised in the second synchronization signal block is the same as a frequency bandwidth of the primary synchronization signal comprised in the first synchronization signal block, and a frequency bandwidth of the secondary synchronization signal comprised in the second synchronization signal block is the same as a frequency bandwidth of the secondary synchronization signal comprised in the first synchronization signal block.

4. The method according to claim 3, wherein
a time domain interval between the primary synchronization signal and the secondary synchronization signal that are comprised in the first synchronization signal block is a first time domain interval; and
a time domain interval between the primary synchronization signal and the secondary synchronization signal that are comprised in the second synchronization signal block is a second time domain interval, wherein the first time domain interval is different from the second time domain interval.

5. The method according to any one of claims 2 to 4, wherein the first synchronization signal block and the second synchronization signal block meet at least one of the following:
the second synchronization signal block comprises the primary synchronization signal, and a sequence of the primary synchronization signal comprised in the second synchronization signal block is the same as a sequence of the primary synchronization signal comprised in the first synchronization signal block;
the second synchronization signal block comprises the secondary synchronization signal, and a sequence of the secondary synchronization signal comprised in the second synchronization signal block is the same as a sequence of the secondary synchronization signal comprised in the first synchronization signal block;
the second synchronization signal block comprises the primary synchronization signal, and a sequence corresponding to the primary synchronization signal comprised in the first synchronization signal block is different from a sequence corresponding to the primary synchronization signal comprised in the second synchronization signal block; and
the second synchronization signal block comprises the secondary synchronization signal, and a sequence corresponding to the secondary synchronization signal comprised in the first synchronization signal block is different from a sequence corresponding to the secondary synchronization signal comprised in the second synchronization signal block.

6. The method according to any one of claims 1 to 5, wherein
in one periodicity, the first synchronization signal block is associated with at least one second synchronization signal block, and the at least one second synchronization signal block comprises the second synchronization signal block.

7. The method according to claim 6, wherein a time domain interval between the first synchronization signal block and the at least one second synchronization signal block is a predefined or preconfigured time domain interval.

8. A communications method, comprising:
generating (S201), by an access network device (102), a first synchronization signal block and a second synchronization signal block, wherein a frequency bandwidth of a broadcast message in the first synchronization signal block is greater than a frequency bandwidth of a broadcast message in the second synchronization signal block, and the frequency bandwidth occupied by the broadcast message in the second synchronization signal block is less than or equal to a maximum frequency bandwidth of a narrowband terminal (101); and
sending (S202), by the access network device (102), the first synchronization signal block and the second synchronization signal block.

9. The method according to claim 8, wherein
the first synchronization signal block further comprises a primary synchronization signal and a secondary synchronization signal; and
the second synchronization signal block further comprises at least one of a primary synchronization signal or a secondary synchronization signal.

10. The method according to claim 9, wherein
the second synchronization signal block comprises the primary synchronization signal and the secondary synchronization signal, a frequency bandwidth of the primary synchronization signal comprised in the second synchronization signal block is the same as a frequency bandwidth of the primary synchronization signal comprised in the first synchronization signal block, and a frequency bandwidth of the secondary synchronization signal comprised in the second synchronization signal block is the same as a frequency bandwidth of the secondary synchronization signal comprised in the first synchronization signal block.

11. The method according to claim 10, wherein a time domain interval between the primary synchronization signal and the secondary synchronization signal that are comprised in the first synchronization signal block is a first time domain interval; and
a time domain interval between the primary synchronization signal and the secondary synchronization signal that are comprised in the second synchronization signal block is a second time domain interval, wherein the first time domain interval is different from the second time domain interval.

12. The method according to any one of claims 9 to 11, wherein the first synchronization signal block and the second synchronization signal block meet at least one of the following:
the second synchronization signal block further comprises the primary synchronization signal, and a sequence of the primary synchronization signal comprised in the second synchronization signal block is the same as a sequence of the primary synchronization signal comprised in the first synchronization signal block;
the second synchronization signal block further comprises the secondary synchronization signal, and a sequence of the secondary synchronization signal comprised in the second synchronization signal block is the same as a sequence of the secondary synchronization signal comprised in the first synchronization signal block;
the second synchronization signal block further comprises the primary synchronization signal, and a sequence corresponding to the primary synchronization signal comprised in the first synchronization signal block is different from a sequence corresponding to the primary synchronization signal comprised in the second synchronization signal block; and
the second synchronization signal block further comprises the secondary synchronization signal, and a sequence corresponding to the secondary synchronization signal comprised in the first synchronization signal block is different from a sequence corresponding to the secondary synchronization signal comprised in the second synchronization signal block.

13. The method according to any one of claims 8 to 12, wherein
in one periodicity, the first synchronization signal block is associated with at least one second synchronization signal block, and the at least one second synchronization signal comprises the second synchronization signal block.

14. The method according to claim 13, wherein in the periodicity, each first synchronization signal block is associated with a same quantity of second synchronization signal blocks.

15. A communications apparatus (101), configured to perform the method according to any one of claim 1 to 7.

16. A communications apparatus (102), configured to perform the method according to any one of claim 8 to 14.

## Patentansprüche

1. Kommunikationsverfahren, umfassend:
Empfangen (S203), durch eine Schmalband-Endgerätvorrichtung (101), eines von einer Zugangsnetzwerkvorrichtung (102) gesendeten zweiten Synchronisationssignalblocks; und
Erlangen (S204), durch die Schmalband-Endgerätvorrichtung (101), einer Rundrufnachricht basierend auf dem zweiten Synchronisationssignalblock, wobei
eine Frequenzbandbreite einer Rundrufnachricht in einem ersten Synchronisationssignalblock größer als eine Frequenzbandbreite der Rundrufnachricht in dem zweiten Synchronisationssignalblock ist, der erste Synchronisationssignalblock der Zugangsnetzwerkvorrichtung (102) entspricht und die von der Rundrufnachricht in dem zweiten Synchronisationssignalblock belegte Frequenzbandbreite kleiner als oder gleich einer maximalen Frequenzbandbreite des Schmalband-Endgeräts (101) ist.

2. Verfahren nach Anspruch 1, wobei
der erste Synchronisationssignalblock ferner ein primäres Synchronisationssignal und ein sekundäres Synchronisationssignal umfasst; und
der zweite Synchronisationssignalblock ferner mindestens eines von einem primären Synchronisationssignal oder einem sekundären Synchronisationssignal umfasst.

3. Verfahren nach Anspruch 2, wobei
der zweite Synchronisationssignalblock das primäre Synchronisationssignal und das sekundäre Synchronisationssignal umfasst, eine Frequenzbandbreite des in dem zweiten Synchronisationssignalblock umfassten primären Synchronisationssignals dieselbe wie eine Frequenzbandbreite des in dem ersten Synchronisationssignalblock umfassten primären Synchronisationssignals ist und eine Frequenzbandbreite des in dem zweiten Synchronisationssignalblock umfassten sekundären Synchronisationssignals dieselbe wie eine Frequenzbandbreite des in dem ersten Synchronisationssignalblock umfassten sekundären Synchronisationssignals ist.

4. Verfahren nach Anspruch 3, wobei
ein Zeitbereichsintervall zwischen dem primären Synchronisationssignal und dem sekundären Synchronisationssignal, die in dem ersten Synchronisationssignalblock umfasst sind, ein erstes Zeitbereichsintervall ist; und
ein Zeitbereichsintervall zwischen dem primären Synchronisationssignal und dem sekundären Synchronisationssignal, die in dem zweiten Synchronisationssignalblock umfasst sind, ein zweites Zeitbereichsintervall ist, wobei sich das erste Zeitbereichsintervall von dem zweiten Zeitbereichsintervall unterscheidet.

5. Verfahren nach einem der Ansprüche 2 bis 4, wobei der erste Synchronisationssignalblock und der zweite Synchronisationssignalblock mindestens eines des Folgenden erfüllen:
der zweite Synchronisationssignalblock umfasst das primäre Synchronisationssignal und eine Sequenz des primären Synchronisationssignals, die in dem zweiten Synchronisationssignalblock umfasst ist, ist dieselbe wie eine Sequenz des primären Synchronisationssignals, die in dem ersten Synchronisationssignalblock umfasst ist;
der zweite Synchronisationssignalblock umfasst das sekundäre Synchronisationssignal und eine Sequenz des sekundären Synchronisationssignals, die in dem zweiten Synchronisationssignalblock umfasst ist, ist dieselbe wie eine Sequenz des sekundären Synchronisationssignals, die in dem ersten Synchronisationssignalblock umfasst ist;
der zweite Synchronisationssignalblock umfasst das primäre Synchronisationssignal und eine Sequenz, die dem primären Synchronisationssignal entspricht, das in dem ersten Synchronisationssignalblock umfasst ist, unterscheidet sich von einer Sequenz, die dem primären Synchronisationssignal entspricht, das in dem zweiten Synchronisationssignalblock umfasst ist; und
der zweite Synchronisationssignalblock umfasst das sekundäre Synchronisationssignal und eine Sequenz, die dem sekundären Synchronisationssignal entspricht, das in dem ersten Synchronisationssignalblock umfasst ist, unterscheidet sich von einer Sequenz, die dem sekundären Synchronisationssignal entspricht, das in dem zweiten Synchronisationssignalblock umfasst ist.

6. Verfahren nach einem der Ansprüche 1 bis 5, wobei in einer Periodizität der erste Synchronisationssignalblock mit mindestens einem zweiten Synchronisationssignalblock assoziiert ist und der mindestens eine zweite Synchronisationssignalblock den zweiten Synchronisationssignalblock umfasst.

7. Verfahren nach Anspruch 6, wobei ein Zeitbereichsintervall zwischen dem ersten Synchronisationssignalblock und dem mindestens einen zweiten Synchronisationssignalblock ein vordefiniertes oder vorkonfiguriertes Zeitbereichsintervall ist.

8. Kommunikationsverfahren, umfassend:
Generieren (S201), durch eine Zugangsnetzwerkvorrichtung (102), eines ersten Synchronisationssignalblocks und eines zweiten Synchronisationssignalblocks, wobei eine Frequenzbandbreite einer Rundrufnachricht in dem ersten Synchronisationssignalblock größer als eine Frequenzbandbreite einer Rundrufnachricht in dem zweiten Synchronisationssignalblock ist und die von der Rundrufnachricht belegte Frequenzbandbreite in dem zweiten Synchronisationssignalblock kleiner als oder gleich einer maximalen Frequenzbandbreite eines Schmalband-Endgeräts (101) ist; und
Senden (S202), durch die Zugangsnetzwerkvorrichtung (102), des ersten Synchronisationssignalblocks und des zweiten Synchronisationssignalblocks.

9. Verfahren nach Anspruch 8, wobei
der erste Synchronisationssignalblock ferner ein primäres Synchronisationssignal und ein sekundäres Synchronisationssignal umfasst; und
der zweite Synchronisationssignalblock ferner mindestens eines von einem primären Synchronisationssignal oder einem sekundären Synchronisationssignal umfasst.

10. Verfahren nach Anspruch 9, wobei
der zweite Synchronisationssignalblock das primäre Synchronisationssignal und das sekundäre Synchronisationssignal umfasst, eine Frequenzbandbreite des in dem zweiten Synchronisationssignalblock umfassten primären Synchronisationssignals dieselbe wie eine Frequenzbandbreite des in dem ersten Synchronisationssignalblock umfassten primären Synchronisationssignals ist und eine Frequenzbandbreite des in dem zweiten Synchronisationssignalblock umfassten sekundären Synchronisationssignals dieselbe wie eine Frequenzbandbreite des in dem ersten Synchronisationssignalblock umfassten sekundären Synchronisationssignals ist.

11. Verfahren nach Anspruch 10, wobei ein Zeitbereichsintervall zwischen dem primären Synchronisationssignal und dem sekundären Synchronisationssignal, die in dem ersten Synchronisationssignalblock umfasst sind, ein erstes Zeitbereichsintervall ist; und
ein Zeitbereichsintervall zwischen dem primären Synchronisationssignal und dem sekundären Synchronisationssignal, die in dem zweiten Synchronisationssignalblock umfasst sind, ein zweites Zeitbereichsintervall ist, wobei sich das erste Zeitbereichsintervall von dem zweiten Zeitbereichsintervall unterscheidet.

12. Verfahren nach einem der Ansprüche 9 bis 11, wobei der erste Synchronisationssignalblock und der zweite Synchronisationssignalblock mindestens eines des Folgenden erfüllen:
der zweite Synchronisationssignalblock umfasst ferner das primäre Synchronisationssignal und eine Sequenz des primären Synchronisationssignals, die in dem zweiten Synchronisationssignalblock umfasst ist, ist dieselbe wie eine Sequenz des primären Synchronisationssignals, die in dem ersten Synchronisationssignalblock umfasst ist;
der zweite Synchronisationssignalblock umfasst ferner das sekundäre Synchronisationssignal und eine Sequenz des sekundären Synchronisationssignals, die in dem zweiten Synchronisationssignalblock umfasst ist, ist dieselbe wie eine Sequenz des sekundären Synchronisationssignals, die in dem ersten Synchronisationssignalblock umfasst ist;
der zweite Synchronisationssignalblock umfasst ferner das primäre Synchronisationssignal und eine Sequenz, die dem primären Synchronisationssignal entspricht, das in dem ersten Synchronisationssignalblock umfasst ist, unterscheidet sich von einer Sequenz, die dem primären Synchronisationssignal entspricht, das in dem zweiten Synchronisationssignalblock umfasst ist; und
der zweite Synchronisationssignalblock umfasst ferner das sekundäre Synchronisationssignal und eine Sequenz, die dem sekundären Synchronisationssignal entspricht, das in dem ersten Synchronisationssignalblock umfasst ist, unterscheidet sich von einer Sequenz, die dem sekundären Synchronisationssignal entspricht, das in dem zweiten Synchronisationssignalblock umfasst ist.

13. Verfahren nach einem der Ansprüche 8 bis 12, wobei in einer Periodizität der erste Synchronisationssignalblock mit mindestens einem zweiten Synchronisationssignalblock assoziiert ist und das mindestens eine zweite Synchronisationssignal den zweiten Synchronisationssignalblock umfasst.

14. Verfahren nach Anspruch 13, wobei in der Periodizität jeder erste Synchronisationssignalblock mit einer gleichen Anzahl an zweiten Synchronisationssignalblöcken assoziiert ist.

15. Kommunikationsgerät (101), das dazu konfiguriert ist, das Verfahren nach einem der Ansprüche 1 bis 7 durchzuführen.

16. Kommunikationsgerät (102), das dazu konfiguriert ist, das Verfahren nach einem der Ansprüche 8 bis 14 durchzuführen.

## Revendications

1. Procédé de communication, comprenant :
la réception (S203), par un dispositif terminal à bande étroite (101), d'un second bloc de signal de synchronisation envoyé par un dispositif de réseau d'accès (102) ; et
l'obtention (S204), par le dispositif terminal à bande étroite (101), d'un message de diffusion basé sur le second bloc de signal de synchronisation, dans lequel
une bande passante de fréquence d'un message de diffusion dans un premier bloc de signal de synchronisation est supérieure à une bande passante de fréquence du message de diffusion dans le second bloc de signal de synchronisation, le premier bloc de signal de synchronisation correspond au dispositif de réseau d'accès (102), et la bande passante de fréquence occupée par le message de diffusion dans le second bloc de signal de synchronisation est inférieure ou égale à une bande passante de fréquence maximale du terminal à bande étroite (101).

2. Procédé selon la revendication 1, dans lequel
le premier bloc de signal de synchronisation comprend également un signal de synchronisation primaire et un signal de synchronisation secondaire ; et
le second bloc de signal de synchronisation comprend également au moins l'un d'un signal de synchronisation primaire ou d'un signal de synchronisation secondaire.

3. Procédé selon la revendication 2, dans lequel
le second bloc de signal de synchronisation comprend le signal de synchronisation primaire et le signal de synchronisation secondaire, une bande passante de fréquence du signal de synchronisation primaire comprise dans le second bloc de signal de synchronisation est la même qu'une bande passante de fréquence du signal de synchronisation primaire comprise dans le premier bloc de signal de synchronisation, et une bande passante de fréquence du signal de synchronisation secondaire comprise dans le second bloc de signal de synchronisation est la même qu'une bande passante de fréquence du signal de synchronisation secondaire comprise dans le premier bloc de signal de synchronisation.

4. Procédé selon la revendication 3, dans lequel
un intervalle de domaine temporel entre le signal de synchronisation primaire et le signal de synchronisation secondaire qui sont compris dans le premier bloc de signal de synchronisation est un premier intervalle de domaine temporel ; et
un intervalle de domaine temporel entre le signal de synchronisation primaire et le signal de synchronisation secondaire qui sont compris dans le second bloc de signal de synchronisation est un second intervalle de domaine temporel, dans lequel le premier intervalle de domaine temporel est différent du second intervalle de domaine temporel.

5. Procédé selon l'une quelconque des revendications 2 à 4, dans lequel le premier bloc de signal de synchronisation et le second bloc de signal de synchronisation satisfont à au moins l'une des conditions suivantes :
le second bloc de signal de synchronisation comprend le signal de synchronisation primaire, et une séquence du signal de synchronisation primaire comprise dans le second bloc de signal de synchronisation est la même qu'une séquence du signal de synchronisation primaire comprise dans le premier bloc de signal de synchronisation ;
le second bloc de signal de synchronisation comprend le signal de synchronisation secondaire, et une séquence du signal de synchronisation secondaire comprise dans le second bloc de signal de synchronisation est la même qu'une séquence du signal de synchronisation secondaire comprise dans le premier bloc de signal de synchronisation ;
le second bloc de signal de synchronisation comprend le signal de synchronisation primaire, et une séquence correspondant au signal de synchronisation primaire comprise dans le premier bloc de signal de synchronisation est différente d'une séquence correspondant au signal de synchronisation primaire comprise dans le second bloc de signal de synchronisation ; et
le second bloc de signal de synchronisation comprend le signal de synchronisation secondaire, et une séquence correspondant au signal de synchronisation secondaire comprise dans le premier bloc de signal de synchronisation est différente d'une séquence correspondant au signal de synchronisation secondaire comprise dans le second bloc de signal de synchronisation.

6. Procédé selon l'une quelconque des revendications 1 à 5, dans lequel
dans une périodicité, le premier bloc de signal de synchronisation est associé à au moins un second bloc de signal de synchronisation, et l'au moins un second bloc de signal de synchronisation comprend le second bloc de signal de synchronisation.

7. Procédé selon la revendication 6, dans lequel un intervalle de domaine temporel entre le premier bloc de signal de synchronisation et l'au moins un second bloc de signal de synchronisation est un intervalle de domaine temporel prédéfini ou préconfiguré.

8. Procédé de communication, comprenant :
la génération (S201), par un dispositif de réseau d'accès (102), d'un premier bloc de signal de synchronisation et d'un second bloc de signal de synchronisation, dans lequel une bande passante de fréquence d'un message de diffusion dans le premier bloc de signal de synchronisation est supérieure à une bande passante de fréquence du message de diffusion dans le second bloc de signal de synchronisation, et la bande passante de fréquence occupée par le message de diffusion dans le second bloc de signal de synchronisation est inférieure ou égale à une bande passante de fréquence maximale du terminal à bande étroite (101) ; et
l'envoi (S202), par le dispositif de réseau d'accès (102), du premier bloc de signal de synchronisation et du second bloc de signal de synchronisation.

9. Procédé selon la revendication 8, dans lequel
le premier bloc de signal de synchronisation comprend également un signal de synchronisation primaire et un signal de synchronisation secondaire ; et
le second bloc de signal de synchronisation comprend également au moins l'un d'un signal de synchronisation primaire ou d'un signal de synchronisation secondaire.

10. Procédé selon la revendication 9, dans lequel
le second bloc de signal de synchronisation comprend le signal de synchronisation primaire et le signal de synchronisation secondaire, une bande passante de fréquence du signal de synchronisation primaire comprise dans le second bloc de signal de synchronisation est la même qu'une bande passante de fréquence du signal de synchronisation primaire comprise dans le premier bloc de signal de synchronisation, et une bande passante de fréquence du signal de synchronisation secondaire comprise dans le second bloc de signal de synchronisation est la même qu'une bande passante de fréquence du signal de synchronisation secondaire comprise dans le premier bloc de signal de synchronisation.

11. Procédé selon la revendication 10, dans lequel un intervalle de domaine temporel entre le signal de synchronisation primaire et le signal de synchronisation secondaire qui sont compris dans le premier bloc de signal de synchronisation est un premier intervalle de domaine temporel ; et
un intervalle de domaine temporel entre le signal de synchronisation primaire et le signal de synchronisation secondaire qui sont compris dans le second bloc de signal de synchronisation est un second intervalle de domaine temporel, dans lequel le premier intervalle de domaine temporel est différent du second intervalle de domaine temporel.

12. Procédé selon l'une quelconque des revendications 9 à 11, dans lequel le premier bloc de signal de synchronisation et le second bloc de signal de synchronisation satisfont à au moins l'une des conditions suivantes :
le second bloc de signal de synchronisation comprend également le signal de synchronisation primaire, et une séquence du signal de synchronisation primaire comprise dans le second bloc de signal de synchronisation est la même qu'une séquence du signal de synchronisation primaire comprise dans le premier bloc de signal de synchronisation ;
le second bloc de signal de synchronisation comprend également le signal de synchronisation secondaire, et une séquence du signal de synchronisation secondaire comprise dans le second bloc de signal de synchronisation est la même qu'une séquence du signal de synchronisation secondaire comprise dans le premier bloc de signal de synchronisation ;
le second bloc de signal de synchronisation comprend également le signal de synchronisation primaire, et une séquence correspondant au signal de synchronisation primaire comprise dans le premier bloc de signal de synchronisation est différente d'une séquence correspondant au signal de synchronisation primaire comprise dans le second bloc de signal de synchronisation ; et
le second bloc de signal de synchronisation comprend également le signal de synchronisation secondaire, et une séquence correspondant au signal de synchronisation secondaire comprise dans le premier bloc de signal de synchronisation est différente d'une séquence correspondant au signal de synchronisation secondaire comprise dans le second bloc de signal de synchronisation.

13. Procédé selon l'une quelconque des revendications 8 à 12, dans lequel :
dans une périodicité, le premier bloc de signal de synchronisation est associé à au moins un second bloc de signal de synchronisation, et l'au moins un second signal de synchronisation comprend le second bloc de signal de synchronisation.

14. Procédé selon la revendication 13, dans lequel dans la périodicité, chaque premier bloc de signal de synchronisation est associé à une même quantité de seconds blocs de signal de synchronisation.

15. Appareil de communication (101), configuré pour réaliser le procédé selon l'une quelconque des revendications 1 à 7.

16. Appareil de communication (102), configuré pour réaliser le procédé selon l'une quelconque des revendications 8 à 14.
